(19) Europäisches Patentamt
European Patent Office
Office européen des brevets

(11) **EP 4 692 017 A1**

(12) **EUROPEAN PATENT APPLICATION**
published in accordance with Art. 153(4) EPC

(43) Date of publication:
**11.02.2026 Bulletin 2026/07**

(21) Application number: **24780570.8**

(22) Date of filing: **27.03.2024**

(51) International Patent Classification (IPC):
*C03C 27/12* (2006.01)     *B32B 7/023* (2019.01)
*B32B 17/10* (2006.01)     *B32B 27/08* (2006.01)
*G02B 5/22* (2006.01)      *G02B 5/28* (2006.01)

(52) Cooperative Patent Classification (CPC):
**B32B 7/023; B32B 17/00; B32B 17/10;
B32B 27/08; G02B 5/22; G02B 5/28**

(86) International application number:
**PCT/JP2024/012513**

(87) International publication number:
**WO 2024/204469 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023059593**

(71) Applicant: Sekisui Chemical Co., Ltd.
**Osaka-shi, Osaka 530-8565 (JP)**

(72) Inventors:
• **SUZUKI, Yuuki**
**Koka-shi, Shiga 528-8585 (JP)**
• **TAKAI, Minako**
**Koka-shi, Shiga 528-8585 (JP)**
• **OOTA, Yuusuke**
**Koka-shi, Shiga 528-8585 (JP)**

(74) Representative: **Ter Meer Steinmeister & Partner
Patentanwälte mbB
Nymphenburger Straße 4
80335 München (DE)**

(54) **INTERLAYER FILM FOR LAMINATED GLASS, AND LAMINATED GLASS**

(57)     An interlayer film for laminated glass in which a color difference ΔE*ab between an L*a*b* color space of reflected light of light incident from one direction and an L*a*b* color space of reflected light of light incident from an opposite direction is 1.2 or more.

EP 4 692 017 A1

**Description**

Technical Field

The present invention relates to an interlayer film for laminated glass, and laminated glass having an interlayer film for laminated glass.

Background Art

Laminated glass is widely used for window glass for various conveyances such as automobiles and window glass for buildings and the like because even if laminated glass is subjected to an external impact and broken, pieces of the broken glass rarely scatter and are safe. As the laminated glass, laminated glass in which an interlayer film for laminated glass including a resin component such as a polyvinyl acetal resin is interposed between a pair of glasses and integrated is widely known.

Conventionally, it has been known that for laminated glass, for the purpose of imparting various functions, a reflection film is contained. For example, Patent Literature 1 discloses laminated glass in which a reflection film having a visible light-selective reflection layer and an infrared light-selective reflection layer is incorporated between paired sheets of glass. It is here indicated that the visible light-selective reflection layer exhibits a reflection peak in a range of 380 to 850 nm and has a natural light reflectance of 5 to 25% at a wavelength of the reflection peak and thus not only a high transmittance is kept, but also a certain amount of light from a light source for head-up displays is reflected and projection properties of a HUD image are enhanced. It is also indicated that the infrared light-selective reflection layer exhibits a reflection peak in a range of 900 to 1200 nm and has a natural light reflectance of 26% or more at a wavelength of the reflection peak and thus face recognition or iris verification of a driver with infrared light can be facilitated.

Interlayer films for laminated glass have been recently often demanded to have aesthetic quality, and interlayer films for laminated glass are sometimes colored by inclusion of colorants. It is also known that for interlayer films for laminated glass, metallic particles are blended for coloration, and, for example, Patent Literature 2 discloses blending of a metallic pigment for coloration, into an interlayer film for laminated glass including polyvinyl butyral and a plasticizer. It is also indicated that, regarding the interlayer film for laminated glass in Patent Literature 2, a resin composition containing a metallic pigment may further contain a color material such as a pigment or a dye.

Citation List

Patent Literatures

   PTL1: WO 2022/075184
   PTL2: WO 2016/028963

Summary of Invention

Technical Problem

However, in recent years, window glass for automobiles or buildings has been progressively diversified in designs, and, for example, has been sometimes demanded to perform various expressions also for automobiles. However, a conventional interlayer film for laminated glass, into which a pigment or a dye is blended, has merely colored window glass, and has not been able to sufficiently enhance aesthetic quality.

Accordingly, it is an object of the present invention to provide an interlayer film for laminated glass, which is excellent in aesthetic quality.

Solution to Problem

As a result of diligent studies, the present inventors have found that an interlayer film for laminated glass is configured so that the color difference ΔE*ab between reflected light of light incident from one direction and reflected light of light incident from an opposite direction is a value equal to or more than a certain value and thus the design in view from one surface of laminated glass having the interlayer film can be allowed to be different from the design in view from the other surface of such laminated glass, and completed the present invention below.

Specifically, the present invention provides the following [1] to [26].

[1] An interlayer film for laminated glass, wherein a color difference ΔE*ab (R) between an L*a*b* color space of reflected light of light incident from one direction and an L*a*b* color space of reflected light of light incident from an opposite direction is 0.5 or more.

[2] The interlayer film for laminated glass according to the above [1], including a reflection layer.

[3] The interlayer film for laminated glass according to the above [2], wherein the reflection layer is a nano-multilayer film.

[4] The interlayer film for laminated glass according to the above [3], wherein the reflection layer includes two kinds of resin layers A and B different in refractive index, and 30 or more of these layers are laminated.

[5] The interlayer film for laminated glass according to the above [4], wherein a thickness of the resin layer A is 30 nm or more and 500 nm or less, and a thickness of the resin layer B is 30 nm or more and 500 nm or less.

[6] The interlayer film for laminated glass according to the above [4] or [5], wherein a difference in refractive index between the resin layer A and the resin layer B is 0.01 or more and 0.15 or less.

[7] The interlayer film for laminated glass according to any of the above [2] to [6], wherein an average reflectance in a wavelength range of 380 to 780 nm of the reflection layer is 25.0% or more.

[8] The interlayer film for laminated glass according to any of the above [2] to [7], wherein the reflection layer has an in-plane non-uniform hue.

[9] The interlayer film for laminated glass according to any of the above [2] to [8], including one or two or more first resin layer(s) disposed on the one surface side of the interlayer film, relative to the reflection layer.

[10] The interlayer film for laminated glass according to the above [9], wherein the one or two or more first resin layer(s) have at least a colored layer including a colorant.

[11] The interlayer film for laminated glass according to the above [10], wherein

the colorant includes a pigment, and
the pigment includes at least one or more selected from the group consisting of carbon black, a quinacridone-based pigment, a copper phthalocyanine-based pigment, a nickel complex azo-based pigment, an isoindolinone pigment, and a perylene-based pigment.

[12] The interlayer film for laminated glass according to any of the above [2] to [11], including one or two or more second resin layer(s) disposed on the other surface side of the interlayer film, relative to the reflection layer.

[13] The interlayer film for laminated glass according to the above [12], wherein the second resin layer includes a filler (A) having at least any of a non-metal material or a metal oxide.

[14] The interlayer film for laminated glass according to the above [13], wherein the filler (A) includes two or more metal oxides.

[15] The interlayer film for laminated glass according to the above [14], wherein the two or more metal oxides have refractive indexes different from each other.

[16] The interlayer film for laminated glass according to any of the above [13] to [15], wherein the filler (A) has a flat plate shape.

[17] The interlayer film for laminated glass according to any of the above [13] to [16], wherein the filler (A) has a multilayer structure.

[18] The interlayer film for laminated glass according to any of the above [13] to [17], wherein an aspect ratio of the filler (A) is 1 or more and 50 or less.

[19] The interlayer film for laminated glass according to any of the above [2] to [18], including

one or two or more first resin layer(s) disposed on the one surface side of the interlayer film, relative to the reflection layer, and
one or two or more second resin layer(s) disposed on the other surface side of the interlayer film, relative to the reflection layer, wherein
a color difference ΔE*ab (S) in an L*a*b* color system between visible transmitted light of the first resin layer(s) and visible transmitted light of the second resin layer(s) is more than 0 and less than 100.

[20] The interlayer film for laminated glass according to any of the above [1] to [19], wherein the color difference E*ab (R) is 2.0 or more.

[21] The interlayer film for laminated glass according to any of the above [1] to [20], wherein the color difference E*ab (R) is 15 or more.

[22] The interlayer film for laminated glass according to any of the above [1] to [21], wherein the color difference E*ab (R) is 30 or more.

[23] Laminated glass including a first laminated glass member, a second laminated glass member, and the interlayer film for laminated glass according to any of the above [1] to [22], wherein

the interlayer film for laminated glass is disposed between the first laminated glass member and the second laminated glass member.

[24] Laminated glass wherein a color difference $\Delta E^*ab$ (Rg) between an $L^*a^*b^*$ color space of reflected light of light incident from one direction and an $L^*a^*b^*$ color space of reflected light of light incident from an opposite direction is 0.5 or more.

[25] The laminated glass according to the above [24], including a first laminated glass member, a second laminated glass member, and an interlayer film for laminated glass, wherein

the interlayer film for laminated glass is disposed between the first laminated glass member and the second laminated glass member, and

the interlayer film for laminated glass includes a reflection layer, and an average reflectance in a wavelength range of 380 to 780 nm of the reflection layer is 25.0% or more.

[26] The laminated glass according to any of the above [23] to [25], including a first member, a reflection layer, and a second member, wherein

the first member has a first laminated glass member and one or two or more first resin layer(s),

the second member has a second laminated glass member and one or two or more second resin layer(s),

the first laminated glass member, the first resin layer, the reflection layer, the second resin layer, and the second laminated glass member are disposed in the listed order, and

a color of the first member and a color of the second member are different.

Advantageous Effects of Invention

According to the present invention, it is possible to provide an interlayer film for laminated glass in which the design in view from one surface of laminated glass having the interlayer film can be allowed to be different from the design in view from the other surface of such laminated glass and which has excellent aesthetic quality.

Brief Description of Drawings

[Fig. 1] Fig. 1 is a schematic cross-sectional view showing a filler (A) having a laminated structure and having a flat plate shape.

[Fig. 2] Fig. 2 is a schematic cross-sectional view showing one example of laminated glass.

[Fig. 3] Fig. 3 is a schematic cross-sectional view showing one example of laminated glass.

[Fig. 4] Fig. 4 is a schematic cross-sectional view showing one example of laminated glass.

[Fig. 5] Fig. 5 is a schematic cross-sectional view showing one example of laminated glass.

[Fig. 6] Fig. 6 is a schematic cross-sectional view showing one example of laminated glass.

[Fig. 7] Fig. 7 is a schematic cross-sectional view showing one example of laminated glass.

[Fig. 8] Fig. 8 is a schematic cross-sectional view showing one example of laminated glass.

[Fig. 9] Fig. 9 is a schematic cross-sectional view showing one example of laminated glass.

[Fig. 10] Fig. 10 is a schematic cross-sectional view showing one example of laminated glass.

[Fig. 11] Fig. 11 is a schematic cross-sectional view showing one example of laminated glass.

[Fig. 12] Fig. 12 is a schematic cross-sectional view showing one example of laminated glass.

[Fig. 13] Fig. 13 is a schematic cross-sectional view showing one example of laminated glass.

[Fig. 14] Fig. 14 is a schematic cross-sectional view showing one example of laminated glass.

[Fig. 15] Fig. 15 is a schematic cross-sectional view showing one example of laminated glass.

[Fig. 16] Fig. 16 is a schematic cross-sectional view showing one example of laminated glass.

[Fig. 17] Fig. 17 is a schematic cross-sectional view showing one example of laminated glass.

[Fig. 18] Fig. 18 is a schematic cross-sectional view showing one example of laminated glass.

[Fig. 19] Fig. 19 is a schematic cross-sectional view showing one example of laminated glass.

Description of Embodiments

The present invention will be described in more detail below.

<Interlayer film for laminated glass>

In the interlayer film for laminated glass of the present invention (hereinafter, sometimes simply referred to as "interlayer film"), the color difference ΔE*ab between the L*a*b* color space of reflected light of light incident from one direction and the L*a*b* color space of reflected light of light incident from an opposite direction (hereinafter, sometimes referred to as "ΔE*ab (R)") is 0.5 or more.

In the present invention, when the color difference ΔE*ab (R) of reflected light is 0.5 or more, the design in view from one surface of laminated glass having the interlayer film of the present invention can be allowed to be different from the design in view from the other surface of such laminated glass, and thus high aesthetic quality can be provided to such laminated glass.

The color difference ΔE*ab (R) of reflected light is preferably 2.0 or more, more preferably 15 or more, and further preferably 30 or more from the viewpoint of an increase in aesthetic quality. The color difference ΔE*ab (R) of reflected light is preferably 100 or less, more preferably 75 or less, and further preferably 50 or less from the viewpoint of feasibility and from the viewpoint of allowing the design in view from one surface not to be excessively different from the design in view from the other surface.

The color difference ΔE*ab (R) of reflected light can also be increased by providing a reflection layer in the interlayer film, or providing, in addition to the reflection layer, a colored layer as a first resin layer, as described later. The color difference ΔE*ab (R) is also easily increased by providing a filler-containing layer having a specified filler (A), as a second resin layer, in the interlayer film.

Furthermore, the color difference ΔE*ab (R) of reflected light is also easily increased by increasing the color difference ΔE*ab (S) between visible transmitted light of the first resin layer and visible transmitted light of the second resin layer, described later.

In the present invention, the color difference ΔE*ab (R) of reflected light is a value determined by bonding two standard clear glass plates via the interlayer film to produce laminated glass, and subjecting the laminated glass to measurement. Specifically, the L*a*b* color space of reflected light of light incident from one surface of the laminated glass produced (namely, one direction) and the L*a*b* color space of reflected light of light incident from the other surface of the laminated glass (namely, opposite direction) are determined. The values of L*, a*, and b* determined are adopted to calculate the color difference, and the color difference thus calculated is defined as the color difference ΔE*ab (R) of reflected light of the interlayer film.

Such a standard clear glass plate has a thickness of 2.5 mm and has a visible light transmittance of 90.5% as measured in accordance with JIS R 3106: 1998. For the clear glass plates, a* = -0.6, b* = 0.2, and the haze is 0.2% or less using the CIE standard illuminant D65 and the color matching functions for a field of view of 10° prescribed in JIS Z 8781-1 (2012), JIS Z 8781-2 (2012), and JIS Z 8781-4 (2013).

[Reflection layer]

The interlayer film of the present invention preferably includes a reflection layer. The reflection layer should be a layer capable of reflecting visible light. The reflection layer can reflect visible light, and can be appropriately used in combination with a first resin layer, a second resin layer, and the like described later to allow the color difference ΔE*ab (R) of reflected light to be equal to or more than a certain value.

As described above, the average reflectance in the visible region of the reflection layer is preferably equal to or more than a certain value from the viewpoint of easily allowing the color difference ΔE*ab (R) to be equal to or more than a certain value. Specifically, the average reflectance in a wavelength range of 380 to 780 nm of the reflection layer is preferably 25.0% or more, more preferably 30.0% or more, and further preferably 35.0% or more.

The average reflectance in the visible region of the reflection layer is preferably equal to or less than a certain value from the viewpoint that a certain transparency is ensured in the interlayer film. Specifically, the average reflectance in a wavelength range of 380 to 780 nm of the reflection layer is preferably 70.0% or less, more preferably 60.0% or less, and further preferably 55.0% or less.

The reflection layer may be one that reflects light in the infrared region in addition to the visible region, or may be one that does not reflect light in the infrared region. The reflection layer can reflect light in the infrared light region to result in an enhancement in heat shielding performance of the interlayer film.

The average reflectance in a wavelength range of 380 to 2500 nm of the reflection layer is preferably 15.0% or more, more preferably 17.0% or more, and further preferably 21.0% or more, and is preferably 55.0% or less, preferably 40.0% or less, and further preferably 30.0% or less.

The average reflectance in the visible region of the reflection layer is preferably higher than the average reflectance in the infrared light region thereof, and specifically, the average reflectance in a wavelength range of 380 to 780 nm is preferably higher than the average reflectance in a wavelength range of 780 to 2500 nm. The average reflectance in the visible region is thus higher to easily increase the color difference ΔE*ab (R) of reflected light without complication of the structure of the reflection layer or an increase in thickness of the reflection layer to a value larger than necessary. The average reflectance in a wavelength range of 380 to 780 nm is higher than the average reflectance in a wavelength range of 780 to 2500 nm from the above viewpoints, and the difference therebetween is preferably 5% or more, more preferably 12% or more, and further preferably 18% or more. The upper limit of the difference in average reflectance is not particularly limited, and is, for example, 50%, preferably 45%, and more preferably 38%.

A specific average reflectance in a wavelength range of 780 to 2500 nm should be 0% or more, and is preferably 3.0% or more, more preferably 5% or more, and further preferably 10% or more from the viewpoint of practical utility and from the viewpoint that certain heat shielding properties are ensured. The average reflectance is preferably 40% or less, preferably 30% or less, and further preferably 20% or less from the viewpoint of simplification of the structure of the reflection layer.

The reflection layer preferably has an in-plane non-uniform hue. When the reflection layer has such a feature, for example, a metallic feeling is easily exhibited and aesthetic quality is much more increased. The "having an in-plane non-uniform hue" means that the reflection intensity differs depending on the change in angle for irradiation of the reflection layer with solar light or pseudo solar light and the color appears to be different. The reflection layer, which has such features, can be realized with, for example, a nano-multilayer film described later. The "color appearing to be different" means that, for example, the color of reflected light recognized by the change in angle for irradiation with pseudo solar light should be different at a color difference (ΔE) of 1.2 or more.

The reflection layer is not particularly limited, examples thereof include known reflection films such as a nano-multilayer film and a resin film (for example, PET film) with a metal thin film sputtered thereon, and in particular, a nano-multilayer film is preferred. By using a nano-multilayer film, the difference in in-plane refractive index, the number of layers laminated, the thickness, and the like with respect to a resin layer A and a resin layer B described later are appropriately adjusted to easily increase the reflectance in a desired wavelength region. Therefore, the wavelength region in which the reflectance is to be increased is appropriately adjusted to also easily increase the color difference ΔE*ab (R) of reflected light. By using a nano-multilayer film, a metallic feeling is easily provided and aesthetic quality is easily increased.

The nano-multilayer film should include two kinds of resin layers A and B different in refractive index, and 30 or more of these layers should be laminated. The resin layer A and the resin layer B should be alternately laminated, and, preferably, the thickness per the resin layer A is 30 nm or more and 500 nm or less and the thickness per the resin layer B is 30 nm or more and 500 nm or less.

The thickness of the resin layer A is more preferably 50 nm or more and 500 nm or less, and further preferably 100 nm or more and 400 nm or less, and the thickness of the resin layer B is more preferably 50 nm or more and 500 nm or less, and further preferably 100 nm or more and 400 nm or less.

The total number of layers laminated in the nano-multilayer film may be 30 or more as described above, and is preferably 50 or more, more preferably 200 or more, further preferably 400 or more, and particularly preferably 600 or more. An increase in total number of layers laminated can allow for an easy increase in reflectance in the visible region and also allows a metallic feeling to be easily provided. The upper limit of the total number of layers laminated is not particularly limited, and is preferably 1500 or less in order to prevent a production apparatus from being increased in size and prevent wavelength selectivity from being reduced due to a reduction in lamination accuracy.

In the nano-multilayer film, the refractive index of the resin layer A should be relatively higher than the refractive index of the resin layer B, and the difference between the refractive index of the resin layer A and the refractive index of the resin layer B is preferably 0.01 or more. By setting the difference in refractive index at 0.01 or more, sufficient reflectance is easily obtained. The difference between the refractive index of the resin layer A and the refractive index of the resin layer B is preferably 0.15 or less. The refractive index mentioned here means the in-plane average refractive index and means the average value of the refractive indexes in directions vertical with the surface direction of a film, and, for example, can be determined by the average value in two directions vertical with each other (the average value of the refractive indexes in MD and TD of a film when such MD and TD are known).

Preferably, the difference between the in-plane average refractive index of the resin layer A and the refractive index in the thickness direction of the resin layer is 0.01 or more and the difference between the in-plane average refractive index of the resin layer B and the refractive index in the thickness direction of the resin layer is 0.01 or less. These allow a reduction in reflectance in a reflection band to hardly occur even by an increase in incident angle, and thus are more preferred.

A resin a constituting the resin layer A and a resin b constituting the resin layer B are preferably resins including fundamental backbones which are the same as each other. The fundamental backbones here mean repeating units respectively constituting the resin a and the resin b, and, for example, when one resin is polyethylene terephthalate, ethylene terephthalate corresponds to such a fundamental backbone. In another example, when one resin is polyethylene, ethylene corresponds to such a fundamental backbone. The resin a and the resin b are preferably resins including fundamental backbones which are the same as each other because interlayer peeling hardly occurs.

A preferred combination of the resin a and the resin b is one in which the difference in glass transition temperature between the resin a and the resin b is preferably 20°C or less. By setting the difference in glass transition temperature at 20°C or less, thickness uniformity in formation of the nano-multilayer film is enhanced and a poor appearance such as color unevenness hardly occurs. It is also possible to prevent the occurrence of excess stretching in formation of the nano-multilayer film.

A preferred resin constituting the nano-multilayer film is a polyester resin, and accordingly, both the resin a and the resin b are preferably polyester resins. It is more preferable to use at least polyethylene terephthalate in the resins for constituting the nano-multilayer film. Accordingly, the resin a and the resin b more preferably each include ethylene terephthalate as a fundamental backbone. Preferably, the resin a is polyethylene terephthalate and the resin b is a polyester in which at least any of spiroglycol, cyclohexane dimethanol, and cyclohexane dicarboxylic acid is copolymerized. Preferably, the resin a is polyethylene terephthalate and the resin b is a polyester in which neopentyl glycol is copolymerized.

Examples of a preferred combination of the resin a and the resin b include a combination in which the resin a is polyethylene terephthalate or polyethylene naphthalate and the resin b is a polyester including spiroglycol. The polyester including spiroglycol here refers to a polyester in which spiroglycol is copolymerized or a polyester in which spiroglycol is blended with any other homo-polyester. The polyester including spiroglycol is small in difference in glass transition temperature from polyethylene terephthalate or polyethylene naphthalate, and therefore is hardly excessively stretched during molding and hardly causes interlayer peeling.

Examples of a further preferred combination of the resin a and the resin b include a combination in which the resin a is polyethylene terephthalate or polyethylene naphthalate and the resin b is a polyester including spiroglycol and cyclohexane dicarboxylic acid. The polyester including spiroglycol and cyclohexane dicarboxylic acid here refers to a polyester in which spiroglycol and cyclohexane dicarboxylic acid (or an ester derivative of cyclohexane dicarboxylic acid) are copolymerized or a polyester in which these are blended with any other homo-polyester. When the resin b is the polyester including spiroglycol and cyclohexane dicarboxylic acid, the difference in in-plane refractive index from polyethylene terephthalate or polyethylene naphthalate is increased and high reflectance is easily obtained. Such a polyester is small in difference in glass transition temperature from polyethylene terephthalate or polyethylene naphthalate, and therefore is hardly excessively stretched during molding and hardly causes interlayer peeling.

Examples of another preferred combination of the resin a and the resin b include a combination in which the resin a is polyethylene terephthalate or polyethylene naphthalate and the resin b is a polyester including cyclohexane dimethanol. The polyester including cyclohexane dimethanol here refers to a polyester in which cyclohexane dimethanol is copolymerized or a polyester in which cyclohexane dimethanol is blended with any other homo-polyester. The polyester including cyclohexane dimethanol is small in difference in glass transition temperature from polyethylene terephthalate or polyethylene naphthalate, and therefore is hardly excessively stretched during molding and hardly causes interlayer peeling.

Examples of another preferred combination of the resin a and the resin b include a combination in which the resin a is polyethylene terephthalate or polyethylene naphthalate and the resin b is a polyester including neopentyl glycol. The polyester including neopentyl glycol here refers to a polyester in which neopentyl glycol is copolymerized or a polyester in which neopentyl glycol is blended with any other homo-polyester.

The resin b is more preferably an ethylene terephthalate polycondensate in which the amount of cyclohexane dimethanol copolymerized is 15 mol% or more and 60 mol% or less. Thus, not only high reflection performance is kept, but also the changes in optical properties particularly due to heating or passage of time are small and interlayer peeling also hardly occurs. Such an ethylene terephthalate polycondensate in which the amount of cyclohexane dimethanol copolymerized is 15 mol% or more and 60 mol% or less very strongly adheres to polyethylene terephthalate. The cyclohexane dimethanol group has a cis form and a trans form as geometric isomers, and also has a chair form and a boat form as conformational isomers, and therefore orientational crystallization hardly occurs even by co-stretching with polyethylene terephthalate, high reflectance is achieved, the changes in optical properties due to a heat history are also less caused, and breakage during film formation hardly occurs.

The resin b is also preferably ethylene terephthalate polycondensate in which the amount of neopentyl glycol copolymerized is 15 mol% or more and 60 mol% or less.

The nano-multilayer film in the present invention has a structure in which the resin layer A and the resin layer B are alternately laminated in the thickness direction, and this alternately laminated structure may include a third layer (resin layer C) other than the resin layer A and the resin layer B. Examples include laminated structures with regular arrangements, such as A(BCA)n, A(BCBA)n, and A(BABCBA)n. Herein, n is the number of repeating units, and, for example, a case where n = 3 is satisfied in A(BCA)n represents a laminated structure with an arrangement of ABCABCABCA in the thickness direction.

The method for producing the nano-multilayer film is described in, for example, JP 2004-249587 A, JP 2005-59332 A, JP 2007-301982 A, JP 2009-78421 A, JP 2010-184493 A, or JP 2015-110276 A, and the nano-multilayer film can be produced with reference to such Patent Literature.

The nano-multilayer film used in the present invention can be commercially available. Examples include "PICASUS" (registered trademark) manufactured by Toray Industries, Inc., and trade name "MLF film" series manufactured by DuPont Teijin Films.

The thickness of the reflection layer is, for example, 20 μm or more and 300 μm or less, preferably 30 μm or more and 250 μm or less, and more preferably 50 μm or more and 200 μm or less. The reflection layer, when has a thickness of 20 μm or more, sufficiently reflects visible light to easily increase the color difference ΔE*ab (R) of reflected light. The reflection layer, when has a thickness of 300 μm or less, is prevented from being thicker than necessary and can be adjusted so that the interlayer film has an appropriate thickness.

[First Resin Layer]

The interlayer film of the present invention preferably includes, in addition to the reflection layer, one or two or more first resin layer(s). The first resin layer is a resin layer disposed on the one surface side of the interlayer film, relative to the reflection layer in the interlayer film. The first resin layer may be in the form of a single layer or in the form of a plurality of layers.

The following description is here made under the assumption that one surface (namely, surface on the first resin layer side) of the interlayer film serves as a surface on the interior side (namely, car interior side in automobiles) in the case of use as laminated glass. Accordingly, the other surface (namely, when a second resin layer described later is provided, surface on the second resin layer side) of the interlayer film serves as a surface on the exterior side (namely, car exterior side in automobiles) in the case of use as laminated glass.

(Colored Layer)

The first resin layer preferably includes a colored layer containing a colorant. Accordingly, when the first resin layer is in the form of a single layer, this single resin layer should be such a colored layer, or when the first resin layer is in the form of a plurality of layers, at least one of the plurality of such first resin layers should be such a colored layer. The colorant in the first resin layer should be dispersed in a resin constituting the first resin layer.

The first resin layer, which has such a colored layer, thus allows the interlayer film to be colored to a desired color and easily provides higher aesthetic quality. Furthermore, solar light can be partially absorbed by the colorant, and therefore heat shielding properties are also easily enhanced.

The first resin layer, which has such a colored layer, thus allows incident light and/or light reflected by the reflection layer to be absorbed in the colored layer, and therefore L*, a*, and b* of incident light from the one surface side of the interlayer film and/or reflected light thereof are sufficiently changed and the color difference ΔE*ab (R) of reflected light is easily increased. Accordingly, the hue easily varies, for example, between the case of view of the interlayer film from the other surface side thereof and the case of view of the interlayer film from the one surface side thereof, and, for example, a case can be achieved in which, while a metallic feeling is strong in view from the other surface side, a metallic feeling in view from the one surface side is suppressed, and aesthetic quality is much more easily increased. An appearance as described above in which a metallic feeling in view from the other surface side is strong and a metallic feeling is weak in view from the one surface side can provide an impactful appearance in view from the other surface (namely, exterior), whereas can provide a muted-inspired interior in view from one surface (namely, interior), and thus aesthetic quality can be increased.

A pigment or a dye to be blended in a conventional interlayer film for laminated glass can be used as the colorant. The colorant is suitably a pigment from the viewpoint of being capable of effectively coloring the interlayer film in a small amount of blending.

Examples of the pigment include a phthalocyanine-based pigment such as a copper phthalocyanine-based pigment, an anthraquinone-based pigment, a perylene-based pigment, an azo-based pigment, carbon black, a quinacridone-based pigment, a titanium oxide-based pigment, a diketopyrrolopyrrole-based pigment, a thioindigo-based pigment, a Ni complex-based pigment, a perinone-based pigment, an isoindoline-based pigment, a quinophthalone-based pigment, a threne-based pigment, a dioxazine-based pigment, a pyrrocoline-based pigment, calcium carbonate, and any derivative thereof.

The colorant may be used singly, or two or more thereof may be used in combination in the colored layer.

In particular, at least one selected from the group consisting of carbon black, a quinacridone-based pigment, a copper phthalocyanine-based pigment, a cobalt phthalocyanine-based pigment, a nickel complex azo-based pigment, an isoindolinone pigment, an anthraquinone-based pigment, a thioindigo-based pigment, an isoindoline-based pigment, an isoindolinone-based pigment, a quinophthalone-based pigment, a threne-based pigment, a titanium oxide-based pigment, a diketopyrrolopyrrole-based pigment, and a perylene-based pigment is preferred, at least one selected from the group consisting of carbon black, a quinacridone-based pigment, a copper phthalocyanine-based pigment, a nickel complex azo-based pigment, an isoindolinone pigment, and a perylene-based pigment is more preferred, and the colorant particularly preferably includes carbon black, from the viewpoints of durability and compatibility with a film. By using carbon black, the one can provide a muted color tone, easily provides a sense of high quality, and the like, and can much more increase aesthetic quality. When carbon black is used as the colorant, combination use of carbon black and any other colorant than carbon black is also preferred from the viewpoint of a more increase in aesthetic quality, and such any other colorant than carbon black should be appropriately selected from the above colorants described above, other than carbon black, and then used. More specifically, any of an azo-based pigment, a phthalocyanine-based pigment, and a quinacridone-based pigment is also preferably used in combination.

The content of the colorant in the colored layer is preferably 0.0001% by mass or more and 0.3% by mass or less. When the content is 0.0001% by mass or more, transmitted light and light reflected by the reflection layer are sufficiently absorbed by the colorant, the design in view from one surface of laminated glass can be sufficiently allowed to be different from the design in view from the other surface of laminated glass, and aesthetic quality is increased. In addition, proper colorability can also be exhibited. When the content is 0.3% by mass or less, light can be prevented from being more absorbed by the colorant than necessary and the transparency of laminated glass is easily ensured. The content of the colorant in the colored layer is more preferably 0.001% by mass or more, further preferably 0.003% by mass or more, and still further preferably 0.05% by mass or more, and is more preferably 0.2% by mass or less, further preferably 0.15% by mass or less, and still further preferably 0.12% by mass or less from the above viewpoints.

The colored layer may contain, in addition to the above colorant, a heat shielding material. That is, the colored layer may have a function of a heat shielding layer described later. The heat shielding material used in the colored layer is as described with respect to a heat shielding layer described later and the content thereof is also as described with respect to such a heat shielding layer, and therefore the descriptions thereof are omitted.

(Heat Shielding Layer)

The first resin layer may include a heat shielding layer containing a heat shielding material. When the first resin layer has such a heat shielding layer, the car interior and the interior can be appropriately prevented from getting hot. A certain amount of incident light and/or light reflected by the reflection layer is absorbed by such a heat shielding layer, and therefore the color difference ΔE*ab (R) of reflected light is easily increased and the design in the case of view from the other surface side and the design in the case of view from the one surface side can also be changed. The heat shielding material should be dispersed in a resin constituting the heat shielding layer.

The heat shielding layer is typically a material that can absorb infrared light at a wavelength of 780 nm or more, namely, heat ray. The heat shielding material includes an inorganic material, heat shielding particles are typically used, and specific examples thereof include metal oxide particles, and other particles than metal oxide particles, such as lanthanum hexaboride (LaB6) particles. Examples of the metal oxide particles include tin oxide particles such as aluminum-doped tin oxide particles, indium-doped tin oxide particles and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Any other heat shielding material than the above may also be used. The heat shielding material may be used singly, or two or more thereof may be used in combination.

In particular, metal oxide particles are preferred, at least one selected from ATO particles, GZO particles, ITO particles and CWO particles is more preferably used, ITO particles or CWO particles are further preferably used, and ITO particles are preferably used because a heat ray blocking function is high.

The content of the heat shielding material in the heat shielding layer is not particularly limited, and is, for example, 0.01% by mass or more and 3% by mass or less, preferably 0.05% by mass or more and 1% by mass or less, and further preferably 0.1% by mass or more and 0.5% by mass or less based on the total amount of the heat shielding layer. By setting the content of the heat shielding material at the above lower limit value or more, the car interior and the interior can be appropriately prevented from getting hot. The color difference $\Delta E^*ab$ (R) of reflected light, or the like, is easily increased. By setting the content at the above upper limit or less, the transparency of the interlayer film can be prevented from being more impaired than necessary by the heat shielding layer.

(Filler-Containing Layer)

The first resin layer may also have a filler-containing layer containing a filler (A) described later. When the first resin layer has such a filler-containing layer, a metallic feeling is easily exhibited in the interlayer film. The filler (A) used in the filler-containing layer is as described with respect to a second resin layer described later and the content thereof is also as described later, and therefore the descriptions thereof are omitted.

(Clear Layer)

The first resin layer may have a layer not substantially containing the above colorant, heat shielding agent, and filler (A). The layer not substantially containing the colorant, heat shielding agent, and filler (A) generally has a high transmittance, and herein is also called clear layer.

The "not substantially containing the colorant, heat shielding agent, and filler (A)" means that the colorant, the heat shielding agent, and the filler (A) are not intentionally blended in the first resin layer, and a specific total content of the colorant, the heat shielding agent, and the filler (A) in the first resin layer is, for example, less than 0.0001% by mass, preferably less than 0.00001% by mass, and most preferably 0% by mass.

The first resin layer may be constituted from a single layer, or two or more layers, and accordingly, such a single-layer resin layer, or two or more resin layers may be disposed on the one surface side of the interlayer film, relative to the reflection layer.

Each of such first resin layers should be any of the colored layer, the heat shielding layer, the filler-containing layer, and the clear layer, as described above, and when the first resin layer is in the form of a single layer, this single-layer first resin layer should be any of the colored layer, the heat shielding layer, the filler-containing layer, or the clear layer.

The first resin layer, when includes a plurality of layers, should have at least one of the above layers, and may have two or more layers that are the same in type. For example, in such two or more first resin layers, two or more such colored layers may be provided, two or more such heat shielding layers may be provided, two or more such filler-containing layers may be provided, or two or more such clear layers may be provided.

When a plurality of such first resin layers is present, two kinds of layers among the above layers may be provided, for example, the colored layer and the clear layer may be provided, the colored layer and the heat shielding layer may be provided, or the colored layer and the filler-containing layer may be provided.

The first resin layer preferably has at least the clear layer, the colored layer or the heat shielding layer among the above layers, more preferably has at least the colored layer or the heat shielding layer among the above layers, and in particular, more preferably has at least the colored layer. When the first resin layer has the heat shielding layer or the colored layer, in particular, the colored layer, the color difference $\Delta E^*ab$ (R) of reflected light is easily increased, the hue and the design are easily varied between the case of view from the other surface side and the case of view from the one surface side, and aesthetic quality is easily enhanced, as described above.

When a plurality of such first resin layers is present, an embodiment in which the clear layer is included in addition to the colored layer or the heat shielding layer is also preferred, and in particular an embodiment in which the clear layer is included in addition to the colored layer is more preferred.

[Second Resin Layer]

The interlayer film of the present invention preferably includes, in addition to the reflection layer, one or two or more second resin layer(s). The second resin layer is a resin layer disposed on the other surface side of the interlayer film, relative to the reflection layer in the interlayer film. The second resin layer may be in the form of a single layer or in the form of a plurality of layers.

Accordingly, the interlayer film more preferably has one or two or more first resin layer(s) disposed on the one surface side relative to the reflection layer and has one or two or more second resin layer(s) disposed on the other surface side relative to the reflection layer.

(Filler-Containing Layer)

The second resin layer preferably has a layer containing the filler (A) (herein, sometimes referred to as "filler-containing layer"). Accordingly, when the second resin layer is in the form of a single layer, this single resin layer should be a filler-containing layer, or when the second resin layer is in the form of a plurality of layers, at least one of the plurality of such second resin layers should be a filler-containing layer. The filler (A) in the filler-containing layer should be dispersed in a resin constituting the filler-containing layer.

The filler (A) is a filler having any of a metal, a metal oxide, and a non-metal material. The filler (A) has visible light reflection performance. The filler (A) preferably has at least any of metal oxide and a non-metal material, and more preferably has metal oxide. When the filler (A) is formed by a specified material and has visible light reflection performance, a metallic feeling is easily exhibited.

In the present invention, the second resin layer, when has such a filler-containing layer, thus easily allows a metallic feeling to be exhibited in the interlayer film, and in particular, easily allows a metallic feeling to be exhibited in view from the other surface side (namely, exterior side). In addition, light incident from the other surface side is much more easily reflected, and the color difference ΔE*ab (R) of reflected light is easily increased. Therefore, the interlayer film can be significantly different in design between the case of view from the other surface side and the case of view from the one surface side, and can make an impression in which, while a metallic feeling in view from the other surface side is strong, a metallic feeling in view from the one surface side is suppressed. Thus, an impactful appearance can be provided in view from the other surface side (namely, exterior side), whereas a muted-inspired interior can be provided in view from the one surface side (namely, interior side), and aesthetic quality can be much more increased.

Examples of the metal in the filler (A) include aluminum, silver, copper, platinum, gold, titanium, nickel, tin, a tin-cobalt alloy, indium, and chromium. Examples of the metal oxide include metal oxides such as titanium oxide, silicon oxide, indium oxide, niobium oxide, zinc oxide, antimony oxide, tungsten oxide, and aluminum oxide. Examples of the non-metal material include any inorganic compound other than the metal and the metal oxide, and specific examples include glass and mica.

The filler (A) including metal oxide is preferably a filler containing two or more compounds in each particle, and is preferably a filler including two or more metal oxides in each particle or a filler containing metal oxide and a non-metal material such as mica or glass in each particle. The non-metal material is here preferably glass.

The filler containing two or more compounds preferably has a multilayer structure, and specific examples include a filler having a multilayer structure of two or more metal oxides, a filler having a multilayer structure of metal oxide and mica, and a filler having a multilayer structure of metal oxide and glass. The first resin layer easily exhibits a metallic feeling by the filler (A) which has the above multilayer structure. The hues of transmitted light and reflected light can also be changed according to the change in incident angle of light to the interlayer film, and therefore a color travel in which the color is different depending on a viewing angle is generated and the aesthetic quality of the interlayer film can be allowed to be excellent.

The filler (A), when has a multilayer structure of two or more metal oxides, easily provides a metallic feeling with respect to transmitted light and/or reflected light. While coloring is easily imparted to reflected light, transmitted light which penetrates through the interlayer film can be hardly tinted and can also have an achromatic color.

The filler (A), when has a multilayer structure of metal oxide and glass, can decrease the haze and allows the interlayer film for laminated glass to easily ensure transparency. Furthermore, reflection or the like from the filler (A) can be visually recognized as a grain pattern having a gloss feeling, and the interlayer film for laminated glass can be allowed to have special aesthetic quality.

The filler (A), when has a multilayer structure of metal oxide and mica, can increase the degree of whiteness of the interlayer film and can also allow the interlayer film to have a gloss feeling and the like.

In the multilayer structure of metal oxides, two or more metal oxides should have different refractive indexes from each other. Thanks to the metal oxides having different refractive indexes from each other, layers having different refractive indexes are formed, and thereby reflection between the layers is generated and a proper metallic feeling is easily ensured. The layers formed from such metal oxides having different refractive indexes from each other should be adjacent in the filler having a multilayer structure of metal oxides.

The refractive index difference between metal oxides having different refractive indexes from each other is preferably 0.1 or more and 1.2 or less from the viewpoint of making transparency and a metallic feeling good. The refractive index difference is more preferably 0.3 or more and 1.1 or less, and further preferably 0.6 or more and 1.05 or less.

The thickness ratio between layers formed by metal oxides different from each other is preferably 1:2 to 1:15 in the filler (A) having a multilayer structure of two or more metal oxides. By having such a thickness ratio, the filler (A) easily achieves a metallic feeling. The thickness ratio is more preferably 1:3 to 1:13 and further preferably 1:4 to 1:11. The filler (A) can also be controlled in thickness ratio to result in the change in color of reflected light.

The thickness ratio is an average value of values measured by observation of any 50 particles with a scanning electron microscope (SEM) or the like.

Each of the two or more metal oxides should be selected from the group consisting of titanium oxide, silicon oxide, indium oxide, niobium oxide, zinc oxide, antimony oxide, tungsten oxide, aluminum oxide, and iron oxide, and, in particular, is preferably titanium oxide, silicon oxide, and aluminum oxide. The titanium oxide is titanium dioxide ($TiO_2$), and may be of rutile type, anatase type, or brookite type. The silicon oxide is silicon dioxide ($SiO_2$). The aluminum oxide should be alumina ($Al_2O_3$).

The filler (A) more preferably contains both titanium oxide and silicon oxide, and further preferably has a multilayer structure of a titanium oxide layer and a silicon oxide layer.

The filler (A) also preferably contains both titanium oxide and aluminum oxide, or also preferably has a multilayer structure of a titanium oxide layer and an aluminum oxide layer.

The filler (A) preferably has a multilayer structure and is in the form of metal oxide particles formed from the two or more metal oxides as described above, and is preferably in the form of particles in which metal oxide particles (medium layer described later) including at least one metal oxide are coated with at least one different metal oxide.

The filler (A) having a multilayer structure of metal oxide and glass should be formed from glass and metal oxide selected from the group consisting of titanium oxide, silicon oxide, indium oxide, niobium oxide, zinc oxide, antimony oxide, tungsten oxide, aluminum oxide, and iron oxide. The metal oxide is, in particular, preferably titanium oxide, silicon oxide, or both thereof.

The filler (A) having a multilayer structure of metal oxide and glass further preferably has a multilayer structure of a glass layer and a metal oxide layer, and in particular, a medium layer constituting the glass layer is preferably in the form of particles coated with metal oxide (preferably titanium oxide, silicon oxide, or both thereof).

The filler (A) having a multilayer structure of metal oxide and mica should be formed from mica and metal oxide selected from the group consisting of titanium oxide, silicon oxide, indium oxide, niobium oxide, zinc oxide, antimony oxide, tungsten oxide, aluminum oxide, and iron oxide and the metal oxide is, in particular, preferably titanium oxide. The filler (A) having a multilayer structure of metal oxide and mica further preferably has a multilayer structure of a mica layer and a metal oxide layer, and in particular, a medium layer constituting the mica layer is preferably in the form of particles coated with metal oxide (preferably titanium oxide).

The shape of the filler (A) may be any shape of a spherical shape, a multangular shape such as a quadrangular prism shape, a polygonal pyramid shape such as a triangular pyramid shape or a quadrangular pyramid shape, a columnar shape, a circular cone shape, an indefinite shape, a needle shape, a fibrous form, a flat plate shape, and the like, and is preferably a flat plate shape. When the filler (A) has a flat plate shape, a color travel is generated and the hues of transmitted light and reflected light can be changed according to the change in incident angle to the interlayer film.

When the filler (A) has a flat plate shape, incident visible light is oriented along with a surface direction of the interlayer film as described later and thus not only a certain amount of the incident visible light is reflected, but also the transparency of the interlayer film is easily increased. In addition, the regular reflection is unlikely to cause light scattering and easily decreases the haze of laminated glass.

When a flat plate-shaped filler (A) has the above multilayer structure, a plurality of layers is preferably provided along with a thickness direction, and preferably 2 to 5 layers, more preferably 2 to 4 layers, further preferably 3 layers are provided along with the thickness direction.

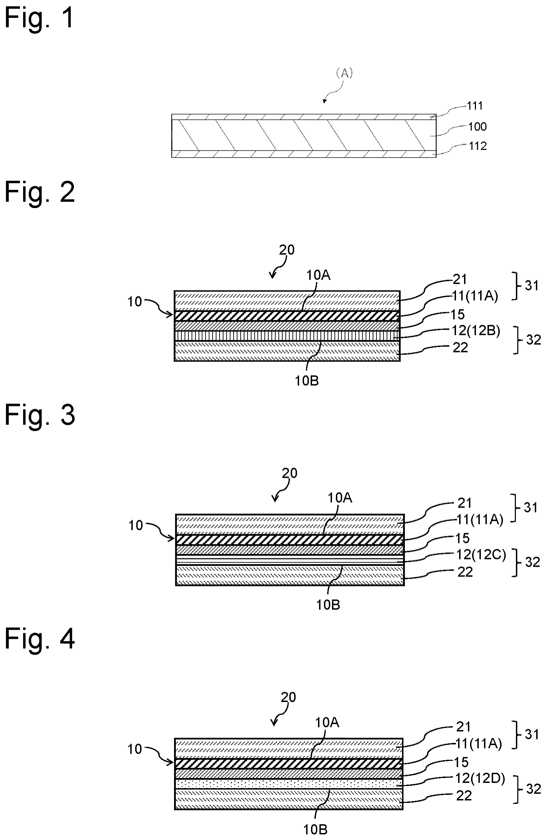

Fig. 1 shows a specific example of a flat plate-shaped filler (A) of a three-layer structure. When the filler (A) has a three-layer structure, the filler should include a medium layer 100 and coating layers 111 and 112 provided on both surfaces of the medium layer 100, as shown in Fig. 1. The filler shown in Fig. 1 should have a multilayer structure of metal oxide, and the metal oxide forming each of the coating layers 111 and 112 may be different from the metal oxide forming the medium layer 100. The metal oxides forming the coating layers 111 and 112 are preferably the same from each other.

The refractive index of the metal oxide forming each of the coating layers 111 and 112 is preferably higher than the refractive index of the medium layer 100. By setting relatively high refractive indexes of the coating layers 111 and 112, light is transmitted with being properly reflected and both the transparency and metallic feeling of the interlayer film are easily made good. In addition, a three-layer structure and higher refractive indexes of the metal oxides of the coating layers 111 and 112 than the refractive index of the medium layer 100 allow incident light from any of both surfaces to be properly reflected, and thus not only transparency can be more effectively ensured, a metallic feeling can be exhibited. Here, the preferred values of the difference between the refractive index of each of the coating layers 111 and 112 and the refractive index of the medium layer 100 are as described above.

The respective thicknesses of the coating layers 111 and 112 are preferably smaller than the thickness of the medium layer 100. Preferred values of a specific thickness ratio (each coating layer : medium layer) are as shown with respect to the thickness ratio between such layers.

In the flat plate-shaped filler (A) having a multilayer structure of metal oxide, preferably, the coating layers 111 and 112 are each a titanium oxide layer and the medium layer 100 is a silicon oxide layer or an aluminum oxide layer, and in particular, the medium layer 100 is particularly preferably a silicon oxide layer. The flat plate-shaped filler (A) is not limited to the above having a three-layer structure, and may have a two-layer structure, and in that case, one of the coating layers 111 and 112 may be omitted. A multilayer structure of four or more layers may also be adopted.

The filler of a multilayer structure of glass and metal oxide should be constituted from a glass layer constituting the medium layer and metal oxide layers which are provided on both surfaces of the glass layer and which constitute the coating layers. The metal oxide in the metal oxide layers should be at least one selected from metal oxides described above, and is preferably titanium oxide and/or silicon oxide. One of such titanium oxide and silicon oxide may be used singly, or two (titanium oxide and silicon oxide) may be used in combination. The metal oxide layer in each of the coating layers may be in the form of one layer or two layers. That is, the filler of a multilayer structure of glass and metal oxide may have a three-layer structure of the metal oxide layer, the medium layer and the metal oxide layer, or may have a five-layer structure of the metal oxide layer, the metal oxide layer, the medium layer, the metal oxide layer, and the metal oxide, in which the metal oxide layer has a two-layer structure. In the five-layer structure, preferably, the metal oxide constituting the outer metal oxide layer is titanium oxide and the metal oxide constituting the inner metal oxide layer is silicon oxide. In the filler of a multilayer structure in which the medium layer is constituted from a glass layer, the metal oxide layers provided on both surfaces of the glass layer are not limited to that of a two-layer structure, and may have three or more layers, and accordingly, the filler of a multilayer structure of a medium layer constituted from a glass layer is not particularly limited as long as it has a structure in which single-layer or multilayer metal oxide layers are provided on both surfaces of the glass layer.

The filler having a metal oxide layer may be a filler having a mica layer and a metal oxide layer. Specifically, the medium layer should be constituted from a mica layer and the coating layer should be constituted from a metal oxide layer, and the coating layer is preferably a titanium oxide layer.

The filler (A) is preferably a filler having a medium layer and a coating layer formed by metal oxide as described above, and in this case the whole of the medium layer surface may be coated with the coating layer or one portion of the medium layer surface may be coated with the coating layer. By coating one portion of the medium layer surface, reflection by the filler (A) is made ununiform. Therefore, reflected light and transmitted light in laminated glass can be, for example, in a patchy manner, to provide special aesthetic quality.

When one portion of the medium layer surface is coated, the coating percentage of the medium layer with the coating layer is, for example, 30% or more and 99% or less, preferably 40% or more and 90% or less, and further preferably 50% or more and 80% or less. When one portion of the medium layer surface is coated, a portion of the medium layer, not coated with the coating layer, may be continuously provided or may be formed, for example, in a spotty manner and thus discontinuously provided.

The average particle diameter (D50) of the filler (A) is preferably 1 $\mu$m or more and 100 $\mu$m or less. By setting average particle diameter within the range, the hues of transmitted light and reflected light are also easily changed according to the change in incident angle or the like to the interlayer film, and a color travel is easily generated. The average particle diameter of the filler (A) is more preferably 3 $\mu$m or more and 90 $\mu$m or less, and further preferably 5 $\mu$m or more and 80 $\mu$m or less from the viewpoint of generation of a color travel. The average particle diameter (D50) is a value measured with a laser diffraction/scattering type particle size distribution measurement apparatus, and the value (D50) at a cumulative volume of 50% is defined as the average particle diameter.

The average particle diameter of the filler (A) having a multilayer structure of metal oxide is preferably 1 $\mu$m or more and 20 $\mu$m or less, preferably 3 $\mu$m or more and 18 $\mu$m or less, and more preferably 5 $\mu$m or more and 16 $\mu$m or less from the viewpoint that not only both transparency and a metallic feeling are achieved, but also light scattering in the interlayer film is easily suppressed.

In this regard, the average particle diameter of the filler (A) having a multilayer structure of metal oxide and glass is preferably equal to or more than a certain value from the viewpoint of enabling a grain pattern having a gloss feeling, and/or the like to be visually recognized by reflected light and/or the like from the filler, and allowing the interlayer film for laminated glass to have special aesthetic quality, and specifically, is preferably 5 $\mu$m or more and 100 $\mu$m or less, more preferably 10 $\mu$m or more and 90 $\mu$m or less, and further preferably 15 $\mu$m or more and 80 $\mu$m or less.

The thickness of the filler (A) is preferably 0.01 $\mu$m or more and 4 $\mu$m or less, more preferably 0.1 $\mu$m or more and 3.5 $\mu$m or less, and further preferably 0.2 $\mu$m or more and 3 $\mu$m or less from the viewpoint of allowing transparency to be easily ensured and allowing a color travel to be easily generated. The filler (A), when has a multilayer structure of metal oxide having a thickness within the range, easily exhibits a metallic feeling. The thickness of the filler (A) is an average value of values measured by observation of any 50 particles with a scanning electron microscope (SEM) or the like. The thickness of the filler (A) should be a length in a direction in which the maximum value among lengths in a direction perpendicular to the longitudinal direction of the filler is the shortest, and the thickness of the flat plate-shaped filler (A) corresponds to a vertical length in Fig. 1.

The aspect ratio of the filler (A) is preferably 1 or more, more preferably 1.1 or more, and further preferably 1.2 or more, and preferably 50 or less, more preferably 30 or less, further preferably 15 or less, and still further preferably 10 or less. When the aspect ratio is the above, a color travel is easily generated. In addition, a certain amount of incident visible light is reflected and also the transparency of the interlayer film is easily increased by orienting the filler (A) along with the surface direction of the interlayer film as described later. In addition, by setting the aspect ratio at 50 or less, the average particle diameter (D50) of the filler (A) can be prevented from being larger than necessary. The aspect ratio of the filler (A) is here the ratio of the length of a longer axis to the length of a shorter axis of the filler (A) recognized with a scanning electron microscope. The longer axis and the shorter axis are respectively a longer axis and a shorter axis of the filler (A) in a plan view along with the thickness direction, and in the case of a flat plate-shaped filler, respectively correspond to a longitudinal direction and a direction perpendicular to the longitudinal direction, in the surface direction of the filler.

When the filler (A) has an orientable anisotropy as in the case of having a flat plate shape, the longitudinal direction thereof is preferably oriented so as to be along with the surface direction of the interlayer film. When the filler (A) has a flat plate shape, the surface direction thereof is preferably oriented so as to be along with the surface direction of the interlayer film. That is, the flat plate-shaped filler (A) is preferably oriented so that the thickness direction of the filler (A) is along with the thickness direction of the interlayer film. The filler (A), when has the above orientation, enables light travelling in the interlayer film along with the thickness direction to be not only appropriately reflected, but also partially transmitted, and also enables light scattering occurring in the filler (A) to be suppressed. Therefore, the haze is lowered to facilitate an enhancement in transparency.

In the first resin layer, the filler (A) may be used singly, or two or more thereof may be used in combination.

The method for producing the filler (A) is not particularly limited, and, for example, the filler (A) having a multilayer structure should be produced by coating particles formed from metal oxide, with another metal oxide, or coating particles formed from mica or glass, with metal oxide. Alternatively, the flat plate-shaped filler (A) may also be obtained by, for example, coating a sheet formed from metal oxide, with another metal oxide, and then pulverizing the sheet. The filler (A) here used may also be a commercial product.

The content of the filler (A) in the filler-containing layer is preferably 0.01% by mass or more and 0.5% by mass or less. When the content is 0.01% by mass or more, the color difference ΔE*ab (R) is easily relatively larger, a metallic feeling is exhibited, and a color travel is easily generated, to easily increase aesthetic quality. By setting the content at 0.5% by mass or less, light is prevented from being more reflected than necessary in the first resin layer, to result in a lower haze and easily allow see-through properties of the laminated glass to be ensured. From these viewpoints, the content of the filler (A) is more preferably 0.02% by mass or more, further preferably 0.04% by mass or more and still further preferably 0.08% by mass or more, and more preferably 0.4% by mass or less, further preferably 0.3% by mass or less and still further preferably 0.2% by mass or less.

The filler-containing layer may contain further a colorant and thus have a function of a colored layer. When the filler-containing layer contains a colorant, the aesthetic quality of the interlayer film is more easily increased. The detail of the colorant is as described with respect to the first resin layer.

Herein, the filler-containing layer used in the second resin layer preferably contains substantially no colorant. When no colorant is substantially contained, transmitted light of the filler-containing layer easily has influence of the hue of the filler (A). The reflection from the filler (A) is hardly blocked by the colorant and a color travel is easily generated. The "containing substantially no colorant" means that no colorant is intentionally blended in the filler-containing layer, and a specific content of the colorant in the filler-containing layer is, for example, less than 0.0001% by mass, preferably less than 0.00001% by mass, and most preferably 0% by mass based on the total amount of the filler-containing layer.

In this regard, when the filler-containing layer contains a colorant, the detail of the colorant is as described with respect to the first resin layer, the content of the colorant is also as described above, and the descriptions thereof are omitted.

The second resin layer may have a colored layer having a colorant. When the second resin layer has such a colored layer, the aesthetic quality of the interlayer film is easily increased. The detail of the colorant used in the colored layer in the second resin layer is as described with respect to the first resin layer. The content of the colorant in the colored layer of the second resin layer is also as described above, and the description thereof is omitted.

The second resin layer may include a heat shielding layer having a heat shielding material. When the second resin layer has such a heat shielding layer, the car interior and the interior can be appropriately prevented from getting hot. The detail of the heat shielding material used in the heat shielding layer in the second resin layer is as described above. The content of the heat shielding material in the second resin layer is also as described above, and the description thereof is omitted.

The second resin layer may have a layer (clear layer) not substantially containing the above colorant, heat shielding agent and filler (A). The detail of the clear layer is as described with respect to the first resin layer, and the detail thereof is omitted.

The second resin layer may be constituted from a single layer, or two or more layers, and accordingly, a single-layer resin layer, or two or more resin layers may be disposed on the other surface side of the interlayer film, relative to the reflection layer.

Each of such second resin layers should be any of the colored layer, the heat shielding layer, the filler-containing layer, and the clear layer, as described above, and when the second resin layer is in the form of a single layer, this single-layer second resin layer should be any of the colored layer, the heat shielding layer, the filler-containing layer, or the clear layer.

The second resin layer, when includes a plurality of layers, should have at least one of the above layers, and may have two or more layers that are the same in type. For example, in such two or more second resin layers, two or more such colored layers may be provided, two or more such heat shielding layers may be provided, two or more such filler-containing layers may be provided, or two or more such clear layers may be provided.

When a plurality of such second resin layers is present, two kinds of layers among the above layers may be provided, for example, the filler-containing layer and the clear layer may be provided, the filler-containing layer and the colored layer may be provided, or the colored layer and the heat shielding layer may be provided.

The second resin layer preferably has at least one of the clear layer, the heat shielding layer, a color layer, and the filler-containing layer among the above layers, and in particular, more preferably has at least the filler-containing layer. When the first resin layer has the filler-containing layer, the color difference ∆E*ab (R) of reflected light is easily increased and aesthetic quality is easily enhanced, as described above.

When a plurality of such first resin layers is present, an embodiment in which the clear layer is included in addition to the filler-containing layer is also preferred.

[Thermoplastic Resin]

The resins constituting each of such first resin layers (colored layer, heat shielding layer, clear layer, filler-containing layer, and the like) described above are each preferably a thermoplastic resin. The resins constituting each of such second resin layers (colored layer, heat shielding layer, clear layer, filler-containing layer, and the like) are also each preferably a thermoplastic resin. By containing the thermoplastic resin, the first resin layer or the second resin layer easily serves as the function as an adhesive layer, and the adhesiveness to the laminated glass members, and any other layer constituting the interlayer film is good.

The thermoplastic resin in each of the resin layers is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to a laminated glass member is easily ensured.

In particular, a polyvinyl acetal resin, an ethylene-vinyl acetate copolymer resin, an ionomer resin, a polyurethane resin, and a thermoplastic elastomer are preferred.

In the interlayer film of the present invention, one thermoplastic resin may be used singly, or two or more thermoplastic resins may be used in combination. When two or more thermoplastic resins are used in combination, the two or more thermoplastic resins may be contained in one resin layer (first or second resin layer), or different types of thermoplastic resins from each other may be contained in different resin layers (first and second resin layers) respectively, in the interlayer film.

Of these, at least one selected from the group consisting of a polyvinyl acetal resin and an ethylene-vinyl acetate copolymer resin is preferred, and a polyvinyl acetal resin is more preferred in terms of exhibiting excellent adhesiveness to inorganic glass, particularly when it is used in combination with a plasticizer.

Accordingly, the resin in each of the first resin layers is more preferably at least one selected from a polyvinyl acetal resin and an ethylene-vinyl acetate copolymer resin, and more preferably a polyvinyl acetal resin. Similarly, the resin in each of such second resin layers is more preferably at least one selected from a polyvinyl acetal resin and an ethylene-vinyl acetate copolymer resin, and further preferably a polyvinyl acetal resin.

The resins constituting the resin layers should be appropriately selected from the resins listed above. The resins constituting the resin layers may be different resins from each other but are preferably the same as each other.

Therefore, the resins constituting the first and second resin layers are each preferably a polyvinyl acetal resin or an ethylene-vinyl acetate copolymer resin, more preferably a polyvinyl acetal resin.

(Polyvinyl Acetal Resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to laminated glass members, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

(Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to laminated glass members increases, and the penetration resistance of laminated glass easily becomes good. By setting the vinyl acetate content at these upper limit values or less, the breaking strength of the interlayer film increases, and the impact resistance of laminated glass is good.

(Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to laminated glass members.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

(Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol should be selected from the group consisting of a polythiol and a sulfur-containing polyol. The polyurethane resin can make the adhesiveness to organic glass good. Therefore, the polyurethane resin is preferably used when the laminated glass member is organic glass.

(Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The aliphatic polyolefin may be a saturated aliphatic polyolefin or an unsaturated aliphatic polyolefin. The aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

(Plasticizer)

The interlayer film may further contain a plasticizer. The interlayer film has one or a plurality of resin layers, as described above, and each resin layer (namely, for example, each of the first and second resin layers) may contain a plasticizer in addition to the thermoplastic resin.

By containing the plasticizer, each resin layer is flexible and, as a result, enhances the flexibility of laminated glass and also enhances the penetration resistance. Further, it is also possible to enhance adhesiveness to a laminated glass member. The plasticizer is particularly effective when contained when a polyvinyl acetal resin is used as the thermoplastic resin. Therefore, each resin layer, for example, the first resin layer or the second resin layers, more preferably contains a polyvinyl acetal resin and a plasticizer.

Examples of the plasticizer include organic ester plasticizers such as a monobasic organic acid ester and a polybasic organic acid ester, and phosphorus-based plasticizers such as an organic phosphate-based plasticizer and an organic phosphite-based plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more alcohols selected from the group consisting of an alkyl alcohol having 4 to 9 carbon atoms and a cyclic alcohol having 4 to 9 carbon atoms.

Among the plasticizers, triethylene glycol-di-2-ethylhexanoate (3GO) is particularly preferably used.

For example, the content of the plasticizer in each of the resin layers, such as each of such first resin layers or each of such second resin layers, is not particularly limited, and is preferably 10 parts by mass or more and 100 parts by mass or less based on 100 parts by mass of the thermoplastic resin. When the content of the plasticizer is 10 parts by mass or more, each resin layer is moderately flexible, and the penetration resistance, the adhesiveness, and the like are good. When the content of the plasticizer is 100 parts by mass or less, the separation of the plasticizer from each resin layer is prevented. The content of the plasticizer in each resin layer is more preferably 20 parts by mass or more, further preferably 30 parts by mass or more and further preferably 35 parts by mass or more, and more preferably 70 parts by mass or less and further preferably 63 parts by mass or less.

In each of the resin layers, the resin or the resin and the plasticizer are main components, and, for example, the total amount of the thermoplastic resin and the plasticizer in each of such first resin layers or each of such second resin layers is usually 70% by mass or more, preferably 80% by mass or more, and further preferably 90% by mass or more and less than 100% by mass based on the total amount in each of the resin layers.

[Other Additives]

Each resin layer of the present invention may contain other additive(s) than the above, and may contain each additive such as an ultraviolet absorbent, an antioxidant, a light stabilizing agent, an adhesion modifier, a heat shielding agent, a fluorescent brightener, and a crystal nucleating agent. The interlayer film of the present invention has one or two or more resin layer(s) as described above, and each resin layer may appropriately contain at least one selected from the group consisting of these additives.

<Laminated structure>

Hereinafter, a laminated structure of the interlayer film of the present invention will be described with reference to the drawings.

An interlayer film 10 preferably includes a reflection layer 15, one or two or more first resin layer(s) 11 provided on the one surface 10A side of the interlayer film, relative to the reflection layer 15, and one or two or more second resin layer(s) 12 provided on the other surface 10B side of the interlayer film, relative to the reflection layer 15, for example, as shown in Figs. 2 to 19.

The interlayer film 10 should adhere to a first laminated glass member 21 via the one or two or more first resin layer(s) 11 and adhere to a second laminated glass member 22 via the one or two or more second resin layer(s) 12, to form a laminated glass 20. In the interlayer film 10, one surface 10A may serve as an adhesive surface with the first laminated glass member 21 and the other surface 10B should serve as an adhesive surface with the first laminated glass member 21, or any other layer may be provided between the one surface 10A and the first laminated glass member 21 and/or between the other surface 10B and the second laminated glass member 22.

As described above, when the interlayer film 10 is applied to laminated glass, the second resin layer 12 side, namely, the other surface 10B side should be disposed on the exterior side (namely, car exterior side in automobiles) and the one surface 10A side should be disposed on the interior side (namely, car interior side in automobiles).

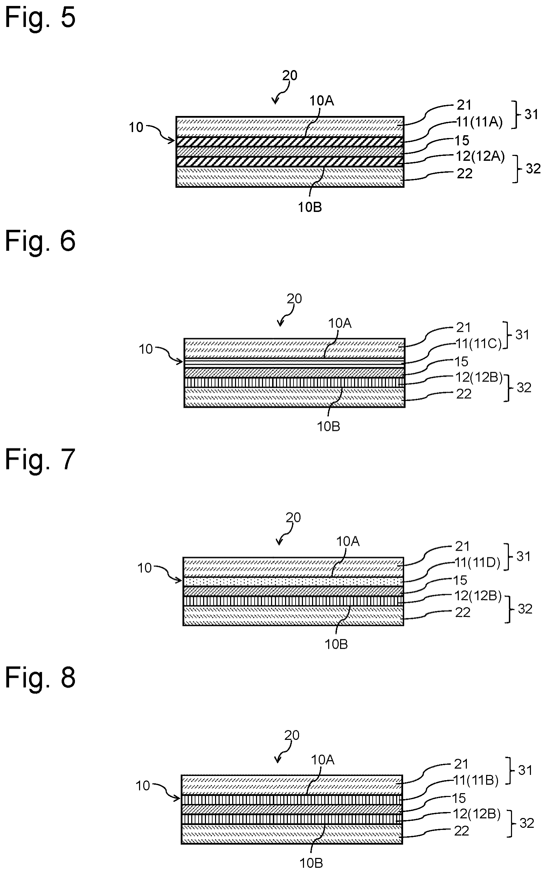

Hereinafter, a layer configuration in which an interlayer film has first and second resin layers will be described in more detail. The interlayer film preferably includes a colored layer 11A as the first resin layer 11, as shown in Figs. 2 to 5, and in this case, a filler-containing layer 12B may be provided (see Fig. 2), a heat shielding layer 12C may be provided (see Fig. 3), a clear layer 12D may be provided (see Fig. 4), or a colored layer 12A may be provided (see Fig. 5) as the second resin layer 12 on the other surface side of the reflection layer.

The interlayer film 10, as shown in Fig. 2, includes the colored layer 11A on the one surface 10A side and includes the filler-containing layer 12B on the other surface 10B side, and thus the colored layer 11A and the filler-containing layer 12B can allow the color difference ∆E*ab (R) of reflected light to be easily increased and can allow the design in view from the one surface 10A to be sufficiently different from the design in view from the other surface 10B. The filler-containing layer 12B can also allow a metallic feeling to be exhibited or allow a color travel to be generated, and can allow for a much more enhancement in aesthetic quality.

Furthermore, when the filler-containing layer 12B is disposed on the other surface 10B side and the colored layer 11A is disposed on the one surface 10A side, an impression is made in which, while a metallic feeling is strong in view from the other surface 10B side (namely, exterior side), a metallic feeling is suppressed in view from the one surface 10A side (namely, interior side). Therefore, an impactful appearance in view from the other surface 10B (namely, exterior) can be provided, whereas a muted-inspired interior can be provided in view from one surface 10A (namely, interior), and aesthetic quality can be increased.

The interlayer film 10, as shown in Fig. 3, includes the colored layer 11A on the one surface 10A side and includes the heat shielding layer 12C on the other surface 10B side, and thus the colored layer 11A can easily allow the color difference ∆E*ab (R) of reflected light to be equal to or more than a certain value and can allow the design in view from one surface to be different from the design in view from the other surface. When the heat shielding layer is provided, the car interior and the interior can be appropriately prevented from getting hot.

The interlayer film 10, as shown in Fig. 4, includes the colored layer 11A on the one surface 10A side and includes the clear layer 12D on the other surface 10B side, and thus the color difference between visible light (visible transmitted light) which penetrates through the first resin layer 11 and visible light (visible transmitted light) which penetrates through the second resin layer 12 can be relatively larger. Therefore, the design in view from one surface can be allowed to be sufficiently different from the design in view from the other surface. When the clear layer 12D is provided, the transmittance of the entire interlayer film 10 is easily increased. The configuration in Fig. 4 may also be one in which the second resin layer 12 has a multilayer structure as described later, and in this case, such second resin layers 12 are each preferably a clear layer.

The interlayer film 10, as shown in Fig. 5, includes the colored layer 11A on the one surface 10A side and includes the colored layer 12A on the other surface 10B side, and thus various color expressions can be made. The design in view from one surface can be allowed to be different from the design in view from the other surface.

When the interlayer film 10 includes the colored layer 11A on the one surface 10A side and includes the colored layer 12A on the other surface 10B side, the type and the content of the colorant in each of the colored layers should be appropriately adjusted so that the color difference ∆E*ab (S) described later is equal to or more than a certain value. In addition, the type and the content of each of the colorants used should be appropriately adjusted so that the L* (S1) of visible transmitted light in the first resin layer 11 is smaller than the L* (S2) of visible transmitted light in the second resin layer 12 and the difference ∆L* therebetween is equal to or more than a certain value.

The interlayer film preferably includes the filler-containing layer 12B as the second resin layer 12 on the other surface 10B side as shown in Fig. 2 and Figs. 6 to 8 described above, and in this case, the colored layer 11A may be provided (see Fig. 2), the heat shielding layer 11C may be provided (see Fig. 6), the clear layer 11D may be provided (see Fig. 7), or the filler-containing layer 11B may be provided (see Fig. 8) as the first resin layer 11 on the one surface 10A side, as described above.

The interlayer film 10, as shown in Fig. 6, includes the heat shielding layer 11C on the one surface 10A side and includes the filler-containing layer 12B on the other surface 10B side, and thus the filler-containing layer 12B easily allows the color difference ∆E*ab (R) of reflected light to be equal to or more than a certain value and can allow the design in view from one surface to be sufficiently different from the design in view from the other surface. A metallic feeling can also be exhibited and a color travel can also be generated. In addition, when the heat shielding layer 11C is provided, the car interior and the interior can be appropriately prevented from getting hot.

The interlayer film 10, as shown in Fig. 7, includes the clear layer 11D on the one surface 10A side and includes the filler-containing layer 12B on the other surface 10B side, and thus the filler-containing layer 12B easily allows the color difference ∆E*ab (R) of reflected light to be equal to or more than a certain value and can allow the design in view from one surface to be sufficiently different from the design in view from the other surface. A metallic feeling can also be exhibited and a color travel can also be generated. In addition, the clear layer 11D easily allows the transmittance of the entire interlayer film 10 to be increased.

The interlayer film 10, as shown in Fig. 8, includes the filler-containing layer 11B and the filler-containing layer 12B respectively on the one surface 10A side and on the other surface 10B side, and thus a sufficient metallic feeling can be exhibited and a color travel can also be easily generated in view from not only the other surface 10B side (exterior side), but also the one surface 10A side (interior side).

The design in view from one surface can be allowed to be different from the design in view from the other surface.

When the interlayer film 10 includes the filler-containing layers 12B and 11B on both sides as described above, the type and the content of the filler (A) used should be appropriately adjusted to allow the color difference $\Delta E^*ab$ (S) described later to equal to or more than a certain value. In addition, the type and the content of the filler (A) used should be appropriately adjusted so that the $L^*$ (S1) of visible transmitted light in the first resin layer 11 is smaller than the $L^*$ (S2) of visible transmitted light in the second resin layer 12 and the difference $\Delta L^*$ therebetween is equal to or more than a certain value.

While an embodiment in which the first resin layer 11 includes one layer and the second resin layer 12 includes one layer is illustrated with respect to the configurations in Figs. 2 to 8, at least one of the first resin layer 11 or the second resin layer 12 may be in the form of two or more layers in each of the configurations.

Also when at least one of the first resin layer 11 or the second resin layer 12 is in the form of two or more layers, the interlayer film preferably includes the first resin layer 11 including the colored layer 11A as described with illustration in Figs. 2 to 5 or the second resin layer 12 including the filler-containing layer 12B as described with illustration in Figs. 2 and 6 to 8.

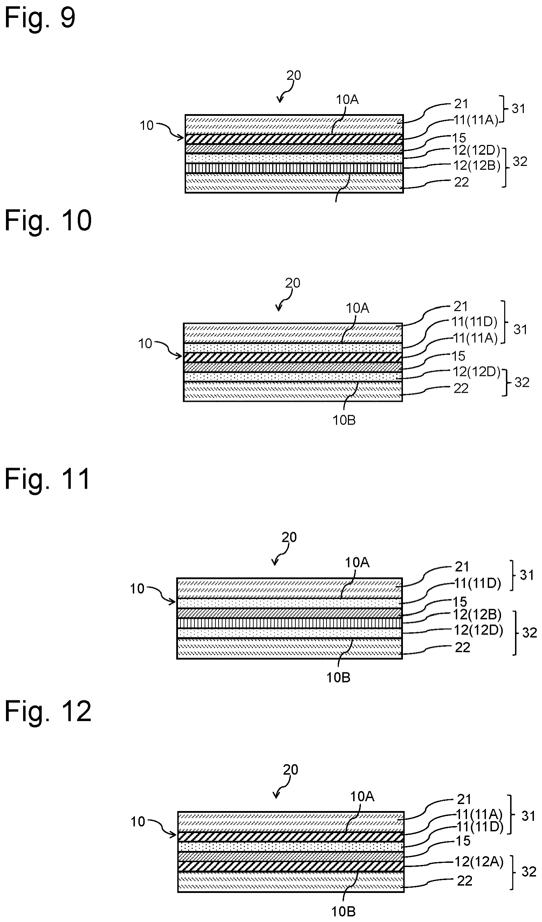

For example, in an embodiment in which the colored layer 11A as the first resin layer 11 and the filler-containing layer 12B as the second resin layer 12 are provided, the clear layer 12D may be further additionally provided in the second resin layer 12 and the second resin layer 12 may have the clear layer 12D and the filler-containing layer 12B as shown in Fig. 9. Of course, in such an embodiment in which the colored layer 11A as the first resin layer 11 and the filler-containing layer 12B as the second resin layer 12 are provided, the first resin layer 11 may have the clear layer 11D and the colored layer 11A, but not shown in the drawing.

Furthermore, in an embodiment in which the colored layer 11A as the first resin layer 11 and the clear layer 12D as the second resin layer 12 are provided as in the configuration in Fig. 4, the clear layer 11D may be further additionally provided as the first resin layer 11 and the first resin layer 11 may have the colored layer 11A and the clear layer 11D as shown in Fig. 10.

In the same manner, in an embodiment in which the clear 11D as the first resin layer 11 and the filler-containing layer 12B as the second resin layer 12 are provided, the clear layer 12D may be further additionally provided in the second resin layer 12 and the second resin layer 11 may have the filler-containing layer 12B and the clear layer 12D as shown in Fig. 11.

For example, in an embodiment in which the colored layer 11A as the first resin layer 11 and the colored layer 12A as the second resin layer 12 are provided, the clear layer 11D may be further additionally provided as the first resin layer 11 and the first resin layer 11 may have the colored layer 11A and the clear layer 11D as shown in Fig. 12. In the same manner, in an embodiment in which the colored layer 11A as the first resin layer 11 and the colored layer 12B as the second resin layer 12 are provided, the clear layer 12D may be further additionally provided in the second resin layer 12 and the second resin layer 12 may have the colored layer 12A and the clear layer 12D, but not shown in the drawing.

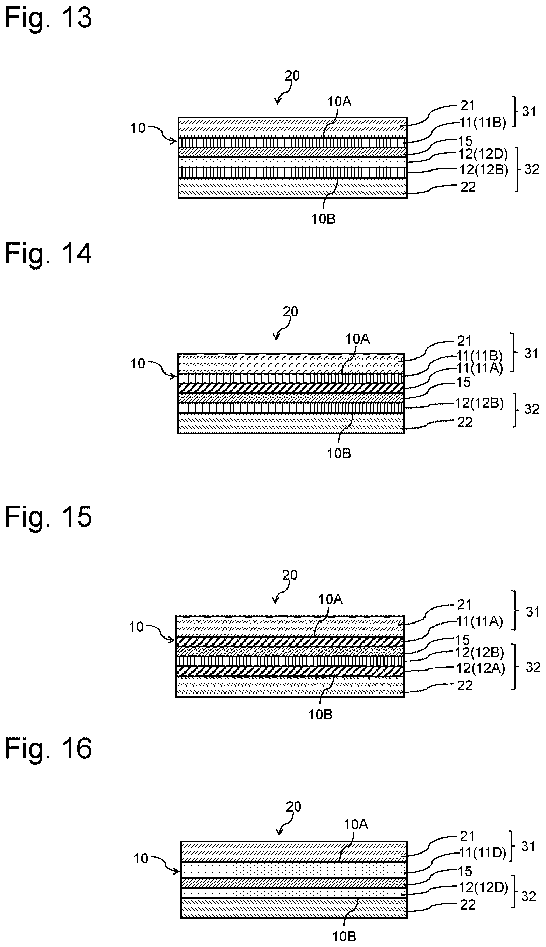

For example, in an embodiment in which the filler-containing layer 11B as the first resin layer 11 and the filler-containing layer 12B as the second resin layer 12 are provided, the clear layer 12D may be further additionally provided in the second resin layer 12 and the second resin layer 12 may have the filler-containing layer 12B and the clear layer 12D as shown in Fig. 13. In the same manner, in such an embodiment in which the filler-containing layer 11B as the first resin layer 11 and the filler-containing layer 12B as the second resin layer 12 are provided, the clear layer 11D may be further additionally provided as the first resin layer 11 and the first resin layer 11 may have the filler-containing layer 11B and the clear layer 11D, but not shown in the drawing.

While an embodiment in which, when a plurality of such first resin layers 11 is provided, the clear layer 11D and any other layer than the clear layer 11D, for example, the colored layer 11A are provided as such first resin layers 11 is indicated, the clear layer 11D need not be provided, two layers other than the clear layer 11 may be provided, for example, two or more layers that are the same, other than the clear layer 11D, for example, such colored layers 11A may be provided or two or more layers that are different from each other, other than the clear layer 11D, may be provided, for example, the colored layer 11A and the filler-containing layer 11B may be provided as shown in Fig. 14. In this case, the filler-containing layer 12B is preferably provided as the second resin layer 12, and any other embodiment may be adopted.

In the same manner, while an embodiment in which, when a plurality of such second resin layers 12 is provided, the clear layer 12D and any other layer than the clear layer 12D, for example, the filler-containing layer 12B are provided as such second resin layers 12 is indicated, the clear layer 12D need not be provided, two layers other than the clear layer 12 may be provided, for example, two or more layers that are the same, other than the clear layer 12D, for example, such filler-containing layers 12B may be provided or two or more layers that are different from each other, other than the clear layer 12D, may be provided, for example, the colored layer 12A and the filler-containing layer 12B may be provided as shown in Fig. 15. In this case, the colored layer 11A is preferably provided as the first resin layer 11, and any other embodiment may be adopted.

While a configuration in which the colored layer 11A is provided as the first resin layer 11 or the filler-containing layer 12B is provided as the second resin layer 12 is described above, the colored layer 11A and the filler-containing layer 12B are not optionally provided. In such a case, for example, the first and second resin layers 11 and 12 should each include at least any of the heat shielding layer and the clear layer, and in one embodiment, both of the first and second resin layers 11 and 12 may be the clear layers 11D and 12D as shown in Fig. 16.

In such a case, for example, the configurations of the clear layers 11D and 12D should be adjusted so that the ΔE*ab (S) described later is equal to or more than a certain value and also the L* (S1) is smaller than the L* (S2) and furthermore the difference ΔL* (S) therebetween is equal to or more than a certain value, and, for example, the thickness of the first resin layer 11 should be larger than the thickness of the second resin layer 12.

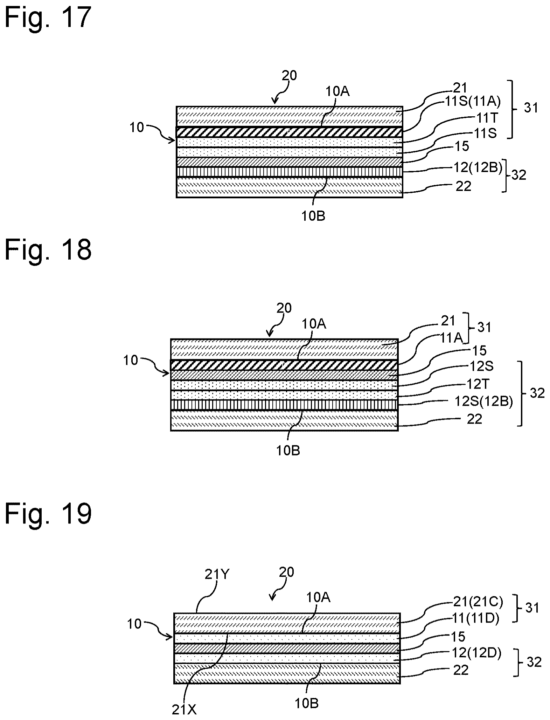

The first resin layer 11, when includes two or more layers, may have, for example, a three-layer structure in which a core layer 11T is the center resin layer and layers located on both sides thereof are skin layers 11S and 11S in such first resin layers 11 as shown in Fig. 17, and may impart sound insulation performance.

The resins used in the skin layer 11S and the core layer 11T are as described above, and are each preferably a polyvinyl acetal resin, and more preferably a polyvinyl butyral resin.

The skin layers 11S and the core layer 11T each preferably contain a plasticizer as described above. The content of the plasticizer based on 100 parts by mass of the thermoplastic resin in the core layer 11T is preferably higher than the content of the plasticizer based on 100 parts by mass of the thermoplastic resin in the skin layers 11S, and the difference in content is preferably 5 parts by mass or more and 60 parts by mass or less, more preferably 10 parts by mass or more and 50 parts by mass or less, and further preferably 15 parts by mass or more and 35 parts by mass or less. By allowing the content of the plasticizer in the core layer 11T to be higher, sound insulation performance is easily enhanced.

The amount of hydroxyl groups in the polyvinyl acetal resin in the core layer 11T is preferably smaller than the amount of hydroxyl groups in the polyvinyl acetal resin in the skin layers 11S, and the difference in amount of hydroxyl groups is preferably 1 mol % or more and 20 mol % or less, more preferably 2 mol % or more and 15 mol % or less, and further preferably 2 mol % or less and 10 mol % or less. By allowing the amount of hydroxyl groups in the core layer to be smaller, the content of the plasticizer is easily higher and sound insulation performance is also easily enhanced.

Also when the first resin layer has a three-layer structure, the first resin layer preferably has the colored layer 11A and any of the skin layer 11S and the core layer 11T is preferably the colored layer 11A as described above, and any of the skin layers 11S and 11S is preferably the colored layer 11A as shown in Fig. 17 and in particular the outer skin layer 11S is more preferably the colored layer 11A as shown in Fig. 17.

In this case, the filler-containing layer 12B may be provided as the second resin layer 12 as shown in Fig. 17, or the heat shielding layer 12C may be provided, the clear layer 12D may be provided, or the colored layer 12A may be provided as the second resin layer 12, as described with reference to Figs. 3 to 5.

Of course, when the first resin layer has a three-layer structure having the skin layers 11S and 11S and the core layer 11T, the first resin layer need not have any colored layer, and the heat shielding layer 11C or the filler-containing layer 11B may be provided as described with reference to Figs. 6 and 8. The heat shielding layer 11C or the filler-containing layer 11B should be constituted from any of the skin layers 11 S and 11S and the core layer 11T as in the case of the colored layer 11A, and is preferably constituted by any of the skin layers 11S and 11S, and in particular, the outer skin layer 11S is preferably the heat shielding layer 11C or the filler-containing layer 11B.

As described with reference to Figs. 7 and 16, the colored layer 11A, the heat shielding layer 11C, and the filler-containing layer 11B are not optionally provided as the first resin layer 11, and all the skin layers 11S and 11S and the core layer 11T in the first resin layer 11 may be each the clear layer 11D.

In the same manner, the second resin layer 11, when includes two or more layers, may have, for example, a three-layer structure in which a core layer 12T is the center resin layer and layers located on both sides thereof are skin layers 12S and 12S in such second resin layers as shown in Fig. 18, and may impart sound insulation performance.

In this case, the details of the core layer 12T and the skin layer 12S are as described above with respect to the core layer 11T and the skin layer 11S, and therefore the descriptions thereof are omitted.

Also when the second resin layer has a three-layer structure, the second resin layer preferably has the filler-containing layer 12B and any of the skin layer 12S and the core layer 12T is preferably the filler-containing layer 12B as described above, and any of the skin layers 12S and 12S is more preferably the filler-containing layer 12B and in particular the outer skin layer 12S is preferably the filler-containing layer 12B as shown in Fig. 18.

In this case, the colored layer 11A may be provided as the first resin layer 11 as shown in Fig. 18, and the heat shielding layer 11C may be provided, the clear layer 11D may be provided, or the filler-containing layer 11B may be provided as the first resin layer 11, as described with reference to Figs. 6 to 8.

Of course, when the second resin layer has a three-layer structure having the skin layers 12S and 12S and the core layer 12T, the second resin layer need not have the filler-containing layer 12B, and the heat shielding layer 12C or the colored layer 12A may be provided as described with reference to Fig. 3 and Fig. 5. The heat shielding layer 12C or the colored layer 12A should be constituted from any of the skin layers 12S and 12S and the core layer 12T as in the case of the filler-containing layer 12B, and is preferably constituted by any of the skin layer 12S and 12S, and in particular, the outer skin layer 12S is preferably the heat shielding layer 12C or the colored layer 12A.

As described with reference to Figs. 4 and 16, the colored layer 12A, the heat shielding layer 12C, and the filler-containing layer 12B are not optionally provided in the second resin layer, and all the skin layers 12S and 12S and the core layer 122T may be each the clear layer 12D.

Needless to say, the above-described laminated structures of the interlayer film are merely illustrative and are not limited to those described above, and one or two or more such first resin layer(s) and one or two or more such second resin layer(s) may each have a laminated structure other than those described above.

At least any of the first resin layer and the second resin layer may be omitted, and in such a case, the reflection layer may directly adhere to the laminated glass member or the reflection layer may adhere to the laminated glass member via a layer other than the first and second resin layers.

(Optical Properties of Resin Layer)

The interlayer film preferably includes, as described above, the reflection layer, one or two or more such first resin layer(s) 11, and one or two or more such second resin layer(s) 12. In this case, the color difference $\Delta E^*ab$ (hereinafter, sometimes referred to as "$\Delta E^*ab$ (S)") in the $L^*a^*b^*$ color system between visible transmitted light of the first resin layer 11 and visible transmitted light of the second resin layer 12 should be, for example, more than 0 and less than 100.

When the $\Delta E^*ab$ (S) is more than 0, the color difference $\Delta E^*ab$ (R) is easily allowed to be a value equal to or more than a certain value, and the design in view from one surface can be allowed to be different from the design in view from the other surface. When the $\Delta E^*ab$ (S) is less than 100, the first resin layer and the second resin layer need not be extremely colored, and therefore favorable aesthetic quality can be maintained.

The $\Delta E^*ab$ (hereinafter, $\Delta E^*ab$ (S)) is preferably 1 or more, more preferably 5 or more, further preferably 20 or more, and still further preferably 35 or more, and is preferably 95 or less, more preferably 85 or less, further preferably 75 or less, and still further preferably 65 or less.

$L^*$ (hereinafter, sometimes referred to as "$L^*$ (S1)") of visible transmitted light of the first resin layer 11 and $L^*$ (hereinafter, sometimes referred to as "$L^*$ (S2)") of visible transmitted light of the second resin layer 12 are preferably set so that the $L^*$ (S2) is higher than the $L^*$ (S1). When the $L^*$ (S2) is higher than the $L^*$ (S1), the design having more influence of reflected light of the reflection layer 15 can be achieved in view from the other surface 10B side (namely, exterior side) of the interlayer film 10, rather than view from the one surface 10A side of the interlayer film 10. Therefore, a more impactful appearance can be achieved in view from the exterior side, and aesthetic quality can be more increased.

The difference $\Delta L^*$ (S) between the $L^*$ (S2) and the $L^*$ (S1) is preferably 1 or more, more preferably 5 or more, further preferably 20 or more, and still further preferably 30 or more, and is preferably 95 or less, more preferably 85 or less, further preferably 75 or less, and still more preferably 65 or less.

The $L^*$ (S1) of visible transmitted light of the first resin layer 11 is not particularly limited, and is preferably 5 or more, more preferably 10 or more, further preferably 20 or more, and still further preferably 35 or more from the viewpoint that certain transparency is imparted to the interlayer film. The $L^*$ (S1) should be less than 100, and is preferably 97 or less, more preferably 80 or less, further preferably 70 or less, and still further preferably 60 or less from the viewpoints of practical utility and aesthetic quality.

The $L^*$ (S2) of visible transmitted light of the second resin layer 12 is not particularly limited, and is preferably 40 or more, more preferably 50 or more, further preferably 60 or more, and still further preferably 70 or more from the viewpoint that certain transparency is imparted to the interlayer film. The $L^*$ (S2) should be less than 100, and is preferably 98 or less, more preferably 97 or less, and further preferably 93 or less from the viewpoints of practical utility and aesthetic quality.

The $\Delta E^*ab$ (S) can be determined by measuring $L^*$, $a^*$, and $b^*$ of visible transmitted light with respect to each of the first resin layer and the second resin layer in irradiation of each of the first resin layer and the second resin layer with light, and calculating the color difference ($\Delta E^*ab$ (S)) from $L^*$, $a^*$, and $b^*$ measured. The color difference ($\Delta E^*ab$ (S)) calculated is defined as the color difference $\Delta E^*ab$ (S) in the $L^*a^*b^*$ color system between visible transmitted light of the first resin layer and visible transmitted light of the second resin layer. When the first resin layer is provided in the form of a plurality of layers, the "visible transmitted light" means transmitted light of all such first resin layers provided, and accordingly, $L^*$, $a^*$, and $b^*$ should be measured with respective laminated bodies of such a plurality of first resin layers. The same also applies to a case where the second resin layer is provided in the form of a plurality of layers.

Measurement of optical properties of each of the resin layers, for example, $L^*$, $a^*$, and $b^*$, is performed by bonding two standard clear glass plates via each of the resin layers to produce laminated glass, and subjecting the laminated glass to measurement, and measurement values obtained are adopted as optical properties of each of the resin layers.

When the interlayer film of the present invention has, for example, the heat shielding layer, the total solar transmittance (Tts) of laminated glass produced by bonding two standard clear glass plates via the interlayer film is preferably 70% or less. By setting the total solar transmittance (Tts) at 70% or less, sufficient heat shielding properties can be ensured, and the car interior and the room interior can be prevented from getting hot.

The total solar transmittance (Tts) is more preferably 60% or less, further preferably 55% or less, still further preferably 45% or less, still further preferably 40% or less, still further preferably 35% or less, and particularly preferably 33% or less. The total solar transmittance (Tts) is more preferably lower from the viewpoint of enhancements in heat shielding properties and should be 0% or more, and is preferably 10% or more in terms of practical use. In measurement of the total solar transmittance (Tts), any of the respective values obtained by measurement of light incident from both surfaces should fall within the above range, and the value obtained by measurement of light incident from the other surface 10B (namely, surface on the exterior side) preferably falls within the range.

Herein, the value obtained by measurement of light transmitted from the car exterior side (namely, second resin layer side) is adopted as Tts mentioned here.

In the interlayer film, when the first resin layer is in a multilayer form (preferably three or more layers), any of a plurality of such first resin layers may be provided on a partial region, and, for example, such a partial region may have a laminated structure of clear layer/colored layer/clear layer and the remaining region may have a laminated structure of clear layer/clear layer in the first resin layer. In this case, such two clear layers may be integrated to constitute one clear layer in a region where no colored layer is provided.

In the same manner, when the second resin layer is in a multilayer form (preferably three or more layers), any of a plurality of such second resin layers may be provided on a partial region, and, for example, such a partial region may have a laminated structure of clear layer/filler-containing layer/clear layer and the remaining region may have a laminated structure of clear layer/clear layer in the second resin layer. In this case, such two clear layers may be integrated to constitute one clear layer in a region where no filler-containing layer is provided.

When any of such first resin layers plurally present and/or any of such second resin layers plurally present are/is thus provided on a partial region, the color difference ΔE*ab (R) should be a predetermined value in any region and the above laminated structure should be included in any region.

The interlayer film may have a cross-sectional rectangular shape and a certain thickness, but the cross-sectional shape of the interlayer film is not limited to a cross-sectional rectangular shape, and the interlayer film may have, for example, a wedge shape. An interlayer film having a wedge shape has a cross section where one end and the other end opposite to the one end have different thicknesses from each other, and the cross section may have, for example, a trapezoidal shape, but may have a triangular shape. For the wedge-shaped interlayer film, the thickness changes from one end toward other end, but the thickness need not change in all portions, and the interlayer film has a portion where the thickness is fixed and the portion where the thickness changes may be partial.

[Thickness of Each Layer]

The total thickness of the first resin layer is preferably 0.1 mm or more and 1.8 mm or less, more preferably 0.16 mm or more and 1.6 mm or less, and further preferably 0.2 mm or more and 1.2 mm or less.

The total thickness mentioned here is the thickness of a single-layer resin layer when the first resin layer is a single layer, and is the total thickness of a plurality of layers when the first resin layer is in the form of a plurality of layers, and the same also applies to the total thickness of the second resin layer described below.

When the first resin layer is provided in the form of a plurality of layers, the thickness of each of such first resin layers is preferably 0.05 mm or more and 1.0 mm or less, more preferably 0.08 mm or more and 0.9 mm or less, and further preferably 0.1 mm or more and 0.8 mm or less. When the first resin layer is provided in the form of a plurality of layers, the respective thicknesses of such first resin layers may be the same as or different from each other.

The total thickness of the second resin layer is preferably 0.1 mm or more and 1.8 mm or less, more preferably 0.16 mm or more and 1.6 mm or less, and further preferably 0.2 mm or more and 1.2 mm or less. The total thickness of the second resin layer may be the same as or different from the total thickness of the first resin layer.

When the second resin layer is provided in the form of a plurality of layers, the thickness of each of such second resin layers is preferably 0.05 mm or more and 1.0 mm or less, more preferably 0.08 mm or more and 0.9 mm or less, and further preferably 0.1 mm or more and 0.8 mm or less. When the second resin layer is provided in the form of a plurality of layers, the respective thicknesses of such second resin layers may be the same as or different from each other.

The thickness of the entire interlayer film is not particularly limited, and is preferably 0.25 mm or more and 3.5 mm or less, more preferably 0.4 mm or more and 2.5 mm or less, and further preferably 0.5 mm or more and 2 mm or less.

Here, each of the resin layers and the interlayer film may be changed in thickness, and in this case, the thickness of each of the resin layers and the thickness of interlayer film, described above, should be each the average value in a region in which the color difference ΔE*ab (R) satisfies a predetermined requirement.

(Method for Producing Interlayer Film)

The interlayer film of the present invention, but not particularly limited, may be obtained by producing each resin composition for forming each of the resin layers, forming the obtained resin composition into each of the resin layers, appropriately laminating each of the formed resin layers on the reflection layer, or, if necessary, appropriately mutually laminating the resin layers. The resin composition may be obtained by, for example, mixing with a thermoplastic resin, the filler (A), the colorant, the heat shielding material, the plasticizer, and any other additive, if necessary blended.

Here, the colorant, the heat shielding material, and the filler (A) should be blended, in addition to the thermoplastic resin, respectively in the colored layer, the heat shielding layer, and the filler-containing layer, and, for example, when the plasticizer is used, any of the colorant, the heat shielding material, or the filler (A) should be blended into the plasticizer, sufficiently dispersed in the plasticizer, and then mixed with the thermoplastic resin, from the viewpoint of enhancing the dispersibility in the resin composition. At this time, a dispersant or the like may be appropriately added to the plasticizer.

The interlayer film should be formed by extrusion, press molding, or the like, and, for example, may be obtained by laminating the resin layer obtained by extrusion, on the reflection layer. The resin layers should be appropriately mutually laminated by extrusion. Coextrusion may be, if necessary, utilized in extrusion.

Each of the resin layers may be changed in thickness along with the direction perpendicular to the thickness direction, and in this case, the thickness should be changed, for example, by adjusting the amount of the resin supplied in extrusion.

The interlayer film may also be obtained by preparing the resin layers and the reflection layer, disposing the resin layers and the reflection layer between paired laminated glass members to obtain a laminated body, and performing thermocompression bonding (press molding) of the laminated body to produce laminated glass and also produce the interlayer film together.

The filler (A), when has an orientable anisotropy as in the case of having a flat plate shape, can be oriented so that the longitudinal direction or the surface direction of the filler (A) is along with the surface direction of the interlayer film (each resin layer) by the above press molding, extrusion, or the like.

<Laminated Glass>

The present invention further provides laminated glass. The laminated glass includes two laminated glass members (first and second laminated glass members), and an interlayer film disposed between these laminated glass members. The two laminated glass members are adhered to each other via the interlayer film. For the interlayer film, one surface is adhered to one laminated glass member, and the other surface is adhered to the other laminated glass member. The configuration of the interlayer film is as described above.

The laminated glass should be produced by disposing the above-described interlayer film between two laminated glass members and integrating these by thermocompression molding or the like. The interlayer film may also be obtained by preparing the resin layers and the reflection layer, disposing the resin layers and the reflection layer between paired laminated glass members to obtain a laminated body, and integrating them by thermocompression bonding or the like of the laminated body.

(Laminated Glass Member)

Examples of the laminated glass members used in the laminated glass include glass plates, and the glass plates may be any of inorganic glass and organic glass, and are preferably inorganic glass. The inorganic glass is not particularly limited, and examples thereof include clear glass, float plate glass, polished plate glass, figured glass, mesh wire glass, line wire glass, and colored glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester. The organic glass may also be colored glass. The colored glass is as described later.

The two laminated glass members may be composed of the same type of material as each other or may be composed of different materials. For example, it is possible that one is inorganic glass and the other is organic glass, but it is preferred that both the two laminated glass members be inorganic glass or organic glass.

The thicknesses of the laminated glass member are not particularly limited but are, for example, about 0.1 to 15 mm, preferably 0.5 to 5 mm. The thicknesses of the laminated glass member may be the same as each other or may be different but are preferably the same.

In the laminated glass of the present invention, the color difference $\Delta E^*ab$ (hereinafter, sometimes referred to as "$\Delta E^*ab$ (Rg)") between the L*a*b* color space of reflected light of light incident from one direction and the L*a*b* color space of reflected light of light incident from an opposite direction should be 0.5 or more.

In the present invention, when the color difference $\Delta E^*ab$ (R) of reflected light is 0.5 or more, the design in view from one surface of the laminated glass of the present invention can be allowed to be different from the design in view from the other surface of the laminated glass, and thus high aesthetic quality can be provided to the laminated glass.

The color difference $\Delta E^*ab$ (Rg) of reflected light is preferably 2.0 or more, more preferably 15 or more, and further preferably 30 or more from the viewpoint of an increase in aesthetic quality. The color difference $\Delta E^*ab$ (Rg) of reflected light is preferably 100 or less, more preferably 75 or less, and further preferably 50 or less from the viewpoint of feasibility and from the viewpoint of allowing the design in view from one surface not to be excessively different from the design in view from the other surface.

The color difference ΔE*ab (Rg) can be equal to or more than a certain value by allowing the ΔE*ab (R) of the interlayer film to be equal to or more than a certain value as described above.

The color difference ΔE*ab (Rg) can be adjusted within a predetermined range also by coloring one laminated glass member (for example, first laminated glass member) to allow the color of the first member to be different from the color of the second member, as indicated with respect to laminated glass according to another aspect described later.

In the present invention, the color difference ΔE*ab (Rg) of reflected light and transmitted light of the laminated glass can be obtained by determining the L*a*b* color space of reflected light of light incident from one surface of the laminated glass (namely, one direction) and the L*a*b* color space of reflected light of light incident from the other surface of the laminated glass (namely, opposite direction), and calculating the color difference by the values of L*, a*, and b* determined, to determine the color difference ΔE*ab (Rg) of reflected light.

(Laminated Glass according to Another Aspect)

Laminated glass according to another aspect of the present invention is described with reference to the drawings, and thus can be said to include a first member 31 having a first laminated glass member 21 and one or two or more first resin layer(s) 11, a reflection layer 15, and a second member 32 having a second laminated glass member 22 and one or two or more second resin layer(s) 12, as shown in Figs. 2 to 19.

In the laminated glass, the first laminated glass member 21, the one or two or more first resin layer(s) 11, the reflection layer 15, the one or two or more second resin layer(s) 12, and the second laminated glass member 22 are disposed in the listed order. The first member 31 and the second member 32 should be different in color from each other.

In the laminated glass having the above configuration, when the reflection layer 15 is provided and the first member 31 and the second member 32 are different in color from each other, the ΔE*ab (Rg) can be equal to or more than a predetermined value and the design in the case of the laminated glass viewed from the one surface side thereof can be allowed to be different from the design in the case of the laminated glass viewed from the other surface side thereof.

In order to allow the color of the first member 31 to be different from the color of the second member 32, for example, the color of the first resin layer 11 should be allowed to be different from the color of the second resin layer 12. Specifically, the color difference ΔE*ab (ΔE*ab (S)) between visible transmitted light of the first resin layer 11 and visible transmitted light of the second resin layer 12 should be, for example, more than 0 and less than 100 as described above. A preferred range of ΔE*ab (S) is as described above. The "different in color" mentioned here means that the color difference ΔE*ab (M) in the L*a*b* color system of visible transmitted light between the first member 31 and the second member 32 is larger than 0, and the color difference ΔE*ab (M) is preferably 2.5 or more, more preferably 5, further preferably 15, still further preferably 20 or more, and still further preferably 30 or more. The color difference ΔE*ab (M) is not particularly limited, and is preferably 95 or less, more preferably 85 or less, further preferably 75 or less, and still further preferably 65 or less.

L* (hereinafter, sometimes referred to as "L*(M1)") of visible transmitted light of the first member 31 and L* (hereinafter, sometimes referred to as "L*(M2)") of visible transmitted light of the second member 32 are preferably set so that L*(M2) is higher than L*(M1). When L*(M2) is higher than L*(M1), the design having more influence of reflected light of the reflection layer can be achieved in view from the second resin layer side (namely, exterior side) of laminated glass 20, rather than view from the first resin layer side of the laminated glass.

In order to allow the color of the first member 31 to be different from the color of the second member 32, the color of the first laminated glass member 21 may be allowed to be different from the color of the second laminated glass member 22. Specifically, the color difference ΔE*ab (hereinafter, ΔE*ab (G)) in the L*a*b* color system between visible transmitted light of the first laminated glass member 21 and visible transmitted light of the first laminated glass member 22 should be, for example, more than 0 and less than 100.

The ΔE*ab (G) is preferably 1 or more, more preferably 5 or more, further preferably 10 or more, and still further preferably 15 or more, and is preferably 95 or less, more preferably 70 or less, further preferably 50 or less, and still further preferably 40 or less.

When the colors of the first and second laminated glass members 21 and 22 are allowed to be different from each other, L* (hereinafter, sometimes referred to as "L* (G1)") of visible transmitted light of the first laminated glass member 21 and L* (hereinafter, sometimes referred to as "L* (G2)") (G2) of visible transmitted light of the second laminated glass member 22 are preferably set so that the L* (G2) is higher than the L* (G1). When the L* (G2) is higher than the L* (G1), the design having more influence of reflected light of the reflection layer 15 can be achieved in view from the second laminated glass member 22 side (namely, the other surface 10B side) of the laminated glass, rather than view from the first laminated glass member 21 side (namely, one surface 10A side) of the laminated glass. Therefore, a more impactful appearance can be achieved in view from the exterior side, and aesthetic quality can be more increased.

When the L* (G2) is higher than the L* (G1), the difference ΔL* (G) between the L* (G2) and the L* (G1) is preferably 1 or more, more preferably 5 or more, further preferably 10 or more, and still further preferably 20 or more, and is preferably 95 or less, more preferably 70 or less, further preferably 50 or less, and still further preferably 40 or less.

When the color of the first laminated glass member 21 is allowed to be different from the color of the second laminated glass member 22, the L* (G1) of visible transmitted light of the first laminated glass member 21 is not particularly limited, and preferably 30 or more, more preferably 40 or more, further preferably 50 or more, and still further preferably 55 or more from the viewpoint that certain transparency is imparted to the laminated glass. The L* (G1) should be less than 100, and is preferably 97 or less, more preferably 95 or less, further preferably 90 or less, and still further preferably 80 or less from the viewpoints of practical utility and aesthetic quality.

When the color of the first laminated glass member 21 is allowed to be different from the color of the second laminated glass member 22, the L* (G2) of visible transmitted light of the second laminated glass member 22 is not particularly limited, and is preferably 70 or more, more preferably 80 or more, and further preferably 90 or more from the viewpoint that certain transparency is imparted to the laminated glass, and preferably the L* (G2) should be less than 100, and is preferably 98 or less, and more preferably 97 or less from the viewpoints of practical utility and aesthetic quality.

In order to allow the colors of the first and second laminated glass members 21 and 22 to be different from each other as described above, at least one of these members is preferably colored and formed into colored glass, and in particular, the first laminated glass member 21 is preferably colored and formed into colored glass 21C as shown in Fig. 19. The colored glass 21C is glass colored by a colorant.

In the colored glass 21C, a laminated glass member itself may contain a colorant. For example, when a colorant is contained in a glass member, a known configuration may be adopted, and in the case of inorganic glass, a known colorant such as metal ions should be blended in the inorganic glass. In the case of organic glass, the above pigment, dye, or the like should be blended in the organic glass. When a colorant is contained in a glass member itself, for example, a colorant should be contained in at least one glass member of two glass members.

The colored glass may also be obtained by forming a colored layer containing a colorant on a surface of a laminated glass member. Specifically, the colored glass may be provided on a surface on the interlayer film 10 side (inside surface 21X) of the laminated glass member 21, or provided on an opposite surface (outside surface 21Y) to the surface on the interlayer film 10 side of the laminated glass member 21.

The colored layer is a coating film formed on a surface of a glass member, and is any embodiment as long as it contains a colorant, and the coating film may include, if necessary, a binder component such as a thermosetting resin or a thermoplastic resin, and may appropriately further contain an additive.

One which is commercially available as green glass or privacy glass may be used as the colored glass.

The colored layer in the colored glass need not be provided on the entire region of the laminated glass, and may be provided on only a partial region. Even when a colorant is contained in a glass member itself constituting the laminated glass to color the glass member, only a partial region of the glass member may be colored.

The embodiment in which the colored glass 21C is used is illustrated with an embodiment in which both the first and second resin layers 11 and 12 are the clear layers 11D and 12D as shown in Fig. 19, but is not limited to this embodiment, and any laminated structure shown in Figs. 2 to 18 can be adopted, or any other laminated structure than those in Figs. 2 to 18 described above can also be adopted.

Herein, when the colored glass 21C is used, among the above, preferred is an embodiment in which both the first and second resin layers 11 and 12 are the clear layers 11D and 12D as shown in Fig. 19, an embodiment in which the colored layer 11A is provided as the first resin layer 11 (see, for example, Figs. 2 to 5), or an embodiment in which the filler-containing layer 12B is provided as the second resin layer 12 (see, for example, Fig. 2 and Figs. 6 to 8).

Furthermore, the embodiment in which the colored layer 11A is provided as the first resin layer 11 is preferably an embodiment in which the second resin layer 12 is the clear layer 12D (see, for example, Fig. 4) or the embodiment in which the filler-containing layer 12B is provided as the second resin layer 12 (see Fig. 2). The embodiment in which the filler-containing layer 12B is provided as the second resin layer 12 is preferably the embodiment in which the colored layer 11A is provided as the first resin layer 11 (see Fig. 2) or an embodiment in which the first resin layer 11 is the clear layer 11D (see Fig. 7).

When the colors of the first member 31 and the second member 32 are allowed to be different from each other, not only the first resin layer 11 is allowed to be different from the second resin layer 12 in color, but also the color of the first laminated glass member 21 may be allowed to be different from the color of the second laminated glass member 22.

The laminated glass of the present invention can be used as window glass for various vehicles such as automobiles, conveyances such as aircraft and ships, buildings, and the like but is preferably used as automobile laminated glass. The automobile laminated glass may be any of windshield glass (front glass), side glass, rear glass, and roof glass.

Window glass is commonly used as a member for partitioning the exterior and the interior in each use. In the interlayer film 10, the one surface 10A as a surface on the first resin layer 11 side should be disposed on the interior side (namely, car interior side in automobiles) and the other surface 10B as a surface on the second resin layer 12 side should be disposed on the exterior side (car exterior side in automobiles), as described above.

Examples

The present invention will be described in more detail by Examples, but the present invention is not limited in any way by these examples.
The measurement methods and the evaluation methods in the present Examples are as follows.

[Color Difference ΔE*ab (R) of Reflected Light, (Rg)]

One surface of each laminated glass obtained in Examples and Comparative Examples was irradiated at an incident angle of 90° with light from a D65 light source in a field of view of 10° in a measurement wavelength range of 300 nm to 2000 nm, to detect reflected light on the one surface in a condition of a wavelength interval of 5 nm, and a*, b*, and L* were measured with an ultraviolet-visible-near infrared spectrophotometer "V-670" (manufactured by JASCO Corporation) provided with an absolute reflectance measurement unit (ARSN-733). The other surface of such each laminated glass was also irradiated in the same manner at an incident angle of 90° with light from the light source, to detect reflected light on the other surface in a condition of a wavelength interval of 5 nm, and a*, b*, and L* were measured in the same manner.
Here, a*, b*, and L* detected on the one surface were defined as a*1, b*1, and L*1, a*, b*, and L* detected on the other surface were defined as a*2, b*2, and L*2, and the color difference ΔE*ab was calculated by the following expression (1) and defined as the color difference ΔE*ab (Rg). When both two laminated glass members in such each laminated glass were standard clear glass plates, the ΔE*ab (Rg) was defined as the color difference ΔE*ab (R).

$$\text{Expression (1): } \Delta E^*ab = \{(a^*2 - a^*1)^2 + (b^*2 - b^*1)^2 + (L^*2 - L^*1)^2\}^{1/2}$$

[L*, a*, and b*, and Color Difference ΔE*ab (G) of Laminated Glass Member]

L*, a*, and b* of each of the first and second laminated glass members were measured with the CIE standard illuminant D65 and the color matching functions for a field of view of 10° prescribed in JIS Z 8781-1(2012), JIS Z 8781-2(2012), and JIS Z 8781-4(2013). Here, a*, b*, and L* of the first laminated glass member were defined as a*1, b*1, and L*1, and a*, b*, and L* of the second laminated glass member were defined as a*2, b*2, and L*2, to calculate the color difference ΔE*ab by the expression (1), and the resulting value was defined as the color difference ΔE*ab (G).

[L*, a*, and b*, and Color Difference ΔE*ab (S) of Resin Layer]

Each resin layer was produced by the same method as in each of Examples and Comparative Examples, and laminated glass (laminated glass for measurement) was produced by pressure-bonding a laminated glass member via the obtained resin layer in the same conditions as in each of Examples and Comparative Examples. The laminated glass member used here was a standard clear glass plate.
L*, a*, and b* in each of the first and second resin layers in the obtained laminated glass for measurement were measured with an ultraviolet-visible-near infrared spectrophotometer "V-670" (manufactured by JASCO Corporation) provided with an absolute reflectance measurement unit (ARSN-733). Here, a*, b*, and L* of the first resin layer were defined as a*1, b*1, and L*1, and a*, b*, and L* of the second resin layer were defined as a*2, b*2, and L*2, to calculate the color difference ΔE*ab by the expression (1), and the resulting value was defined as the color difference ΔE*ab (S).

[L*, a*, and b*, and Color Difference ΔE*ab of First and Second Members]

A first resin layer was produced by the same method as in each of Examples and Comparative Examples, and laminated glass was obtained via the obtained first resin layer, by pressure-bonding the first and second laminated glass members used in each of Examples and Comparative Examples in the same conditions as in each of Examples and Comparative Examples.
A surface of a laminated glass member (namely, second laminated glass member) on the one surface side of the produced laminated glass was ground with a cutter, and the laminated glass whose surface was ground was immersed in liquid nitrogen. Thereafter, the resultant was taken out from liquid nitrogen, the laminated glass member whose surface was ground was then beaten to break the laminated glass, thereby peeling the laminated glass member on the one surface side, to obtain a first member including a laminated body of the first resin layer and the first laminated glass member.
Laminated glass was produced with the second resin layer, the first laminated glass member, and the second laminated glass member by the same method, and the first laminated glass member was peeled from the produced laminated glass by the same method as described above, to obtain a second member including a laminated body of the second resin layer and the second laminated glass member.

The obtained first and second members were subjected to measurement of L*, a*, and b* in the same manner as the method performed for the above laminated glass for measurement. Here, a*, b*, and L* of the first member were defined as a*1, b*1, and L*1, and a*, b*, and L* of the second member were defined as a*2, b*2, and L*2, to calculate the color difference ΔE*ab by the expression (1), and the resulting value was defined as the color difference ΔE*ab (M).

[Reflectance of Reflection Layer]

One surface of the reflection layer was irradiated at an incident angle of 90° with light from a D65 light source in a field of view of 10° in a measurement wavelength range of 300 nm to 2000 nm, to detect reflected light on the one surface in a condition of a wavelength interval of 5 nm, and the reflectance at each wavelength was measured with an ultraviolet-visible-near infrared spectrophotometer "V-670" (manufactured by JASCO Corporation) provided with an absolute reflectance measurement unit (ARSN-733), to determine the average reflectance at 380 to 780 nm, the average reflectance at 780 to 2500 nm, and the average reflectance at 380 to 2500 nm.

[Total Solar Transmittance (Tts)]

The total solar transmittance (Tts) was measured in accordance with ISO 13837 using a spectrophotometer ("U-4100" manufactured by Hitachi High-Technologies Corporation). The measurement conditions were as follows: a scan speed of 300 nm/min and a slit width of 8 nm.

[Evaluation]

The difference in apparent metallic feeling that was visually felt when glass was viewed from the car interior side or the car exterior side was evaluated according by the following 4-point scale. Here, a smaller number means better aesthetic quality.

1: metallic feeling strongly felt on car exterior side, but no metallic feeling felt on car interior side.
2: metallic feeling weakly felt on car exterior side, but no metallic feeling felt on car interior side.
3: metallic feeling strongly felt on both car exterior side and car interior side.
4: no metallic feeling felt at all on both car exterior side and car interior side.

Each raw material used in Examples and Comparative Examples is as follows.

[Laminated Glass Member]

CLR: clear glass (standard clear glass plate)
Gray: privacy glass (privacy glass colored to gray)

[Reflection Layer]

GM40: "PICASUS", Article Number: GM40, nano-multilayer film having in-plane non-uniform hue, manufactured by Toray Industries, Inc.
GL40: "PICASUS", Article Number: GL40, nano-multilayer film having in-plane non-uniform hue, manufactured by Toray Industries, Inc.

Films 1 to 3 were prepared as follows.

(Film 1)

Polyethylene terephthalate (resin a) and polyethylene terephthalate (PET) (resin b) in which 20 mol% of neopentyl glycol was copolymerized were each melted at 280°C in a separate vented twin-screw extruder, and then were converged in a 601-layered feed block separately having four members each having 180 slits. A multilayer body was made so that the outermost layers on both sides thereof each included PET (resin a), a layer including the resin a and a layer including the resin b were alternately laminated, and the thicknesses of a layer including the resin a and a layer including the resin b that were adjacent were almost the same.

Next, after introduction into a T-die and formation into a sheet, the resultant was rapidly solidified with being closely contacted with a casting drum having a surface temperature kept at 25°C by application of static electricity, and thus a cast film was obtained. The obtained cast film was stretched 4.0 times in a longitudinal direction with heating to 80°C, and thereafter cooled once, to obtain a uniaxially stretched film. The obtained uniaxially stretched film was stretched 4.3 times in a lateral direction with a tenter at a temperature of 120°C. The stretched film was heat-treated at 240°C, and then subjected to a relaxation treatment by 8% in a width direction at the same temperature, to obtain Film 1.

(Film 2)

Film 2 was produced in the same manner as in Film 1 except that the resin b was changed to one in which PET and polyethylene terephthalate in which 20 mol% of neopentyl glycol was copolymerized were used at a mass ratio of 1:3.

(Film 3)

Film 3 was produced in the same manner as in Film 1 except that the resin b used here was polyethylene terephthalate in which 40 mol% of neopentyl glycol and 2 mol% of diethylene glycol were copolymerized and the number of layers was 801.

(1) Thermoplastic Resin
PVB: polyvinyl butyral resin, degree of acetalization 69 mol %, amount of hydroxyl groups 30 mol %, degree of acetylation 1 mol %, average degree of polymerization of PVA used for synthesis 1700
(2) Plasticizer
3GO: triethylene glycol di-2-ethylhexanoate
(3) Filler (A)

Filler 1: flat plate shape of three-layer structure shown in Fig. 1, including $SiO_2$ layer (refractive index 1.46) as medium layer and $TiO_2$ layers (refractive index 2.49) as coating layers, thickness ratio (each coating layer : medium layer =1:8), D50: 14 $\mu$m, thickness 0.5 $\mu$m, aspect ratio: 2.8
Filler 2: flat plate shape of three-layer structure shown in Fig. 1, including $SiO_2$ layer (refractive index 1.46) as medium layer and $TiO_2$ layers (refractive index 2.49) as coating layers, thickness ratio (each coating layer : medium layer =1:9), D50: 14 $\mu$m, thickness 0.5 $\mu$m, aspect ratio: 2.8
Filler 3: five-layer structure of $TiO_2/SiO_2/glass/SiO_2/TiO_2$, D50 = 72 $\mu$m, thickness: 2.5 $\mu$m, aspect ratio: 1.5
Filler 4: multilayer structure of aluminum oxide layer as medium layer and $TiO_2$/tin oxide/zirconium oxide as coating layer
Filler 5: multilayer structure of mica layer as medium layer and $TiO_2$/zirconium oxide/tin oxide as coating layer

(4) Heat shielding material
ITO: tin-doped indium oxide particles
(5) Colorant

CB: Carbon Black, Pigment Black 7 (CAS No.1333-86-4), carbon black pigment
GRN: phthalocyanine, (CAS No.147-14-8),

[Example 1]

(Making of Interlayer Film)

The plasticizer and the polyvinyl butyral resin (PVB) were loaded to an extruder according to blending in Table 1, and kneaded in the extruder to obtain a resin composition, first and second resin layers each having a thickness shown in Table 1 were each formed from the obtained resin composition, and were laminated on both surfaces of a nano-reflection film (reflection layer), to produce an interlayer film of a three-layer structure of first resin layer/reflection layer/second resin layer.

(Making of Laminated Glass)

Two sheets of clear glass (standard clear glass plates) each having a size of 100 mm long by 100 mm wide by 2.5 mm thick were provided as the first and second laminated glass members. The interlayer film obtained above was sandwiched between the two clear glasses, and temporarily pressure-bonded by a vacuum packing method. The temporarily pressure-bonded laminated body was mainly pressure-bonded with being retained in an autoclave under conditions of a temperature of 140°C and a pressure of 1.2 MPa for 20 minutes, and then subjected to a temperature drop to 23°C and returning to atmospheric pressure to complete the mainly pressure-bonding, to obtain laminated glass in which the two clear glasses were adhered by the interlayer film. Optical properties of the obtained laminated glass were respectively measured, and shown in Table 1 as the evaluation results of the interlayer film and the laminated glass.

[Example 2]

Carbon black as the colorant was mixed with the plasticizer according to blending in Table 1 and dispersed therein, and these were loaded together with the polyvinyl butyral resin (PVB) to an extruder, and kneaded in the extruder to obtain a resin composition for forming a first resin layer. The plasticizer and the polyvinyl butyral resin (PVB) were loaded to an extruder and these were kneaded in the extruder to obtain a resin composition for forming a second resin layer. The resin compositions obtained were formed into first and second resin layers each having a thickness shown in Table 1, and these layers were laminated on both surfaces of the reflection layer to produce an interlayer film of a three-layer structure of first resin layer/reflection layer/second resin layer. Thereafter, laminated glass was produced in the same manner as in Example 1.

[Example 3]

Operations were carried out in the same manner as Example 2 except that the content of the colorant in the first resin layer was changed as shown in Table 1.

[Example 4]

Operations were carried out in the same manner as Example 2 except that the nano-reflection film used was changed as shown in Table 1.

[Example 5]

Carbon black as the colorant was mixed with the plasticizer according to blending in Table 1 and dispersed therein, and these were loaded together with the polyvinyl butyral resin (PVB) to an extruder, and kneaded in the extruder to obtain a resin composition for forming a first resin layer. The filler (A) was mixed with the plasticizer and dispersed therein, and these were loaded together with the polyvinyl butyral resin (PVB) to an extruder and kneaded in the extruder to obtain a resin composition for forming a second resin layer. The resin compositions obtained were formed into first and second resin layers each having a thickness shown in Table 1, and these layers were laminated on both surfaces of the reflection layer to produce an interlayer film of a three-layer structure of first resin layer/reflection layer/second resin layer. Thereafter, laminated glass was produced in the same manner as in Example 1. The filler (A) was oriented so that the surface direction thereof was along with the surface direction of the interlayer film, and the same also applied to Examples below in which the filler (A) was used.

[Examples 6 to 9]

Operations were carried out in the same manner as Example 5 except that the type of the filler (A) used was changed as shown in Table 1.

[Example 10]

Operations were carried out in the same manner as Example 5 except that the nano-reflection film used was changed as shown in Table 1.

[Example 11]

Operations were carried out in the same manner as Example 1 except that the thickness of the second resin layer was changed as shown in Table 1 and the clear glass as the first laminated glass member to be stacked on the first resin layer was changed to privacy glass.

[Example 12]

The plasticizer and the polyvinyl butyral resin (PVB) were loaded to an extruder according to blending in Table 1 and these were kneaded in the extruder to obtain a resin composition for forming a first resin layer. The filler (A) was mixed with the plasticizer and dispersed therein, and these were loaded together with the polyvinyl butyral resin (PVB) to an extruder and kneaded in the extruder to obtain a resin composition for forming a second resin layer. The resin compositions obtained were formed into first and second resin layers each having a thickness shown in Table 1, and these layers were laminated on both surfaces of the reflection layer to produce an interlayer film of a three-layer structure of first resin layer/reflection layer/second resin layer. Thereafter, laminated glass was produced in the same manner as in Example 1 except that the clear glass as the first laminated glass member to be stacked on the first resin layer was changed to privacy glass.

[Examples 13 and 14]

Operations were carried out in the same manner respectively as Examples 4 and 5 except that the clear glass as the first laminated glass member to be stacked on the first resin layer was changed to privacy glass.

[Example 15]

Carbon black as the colorant was mixed with the plasticizer according to blending in Table 1 and dispersed therein, and these were loaded together with the polyvinyl butyral resin (PVB) to an extruder, and kneaded in the extruder to obtain a resin composition for forming a first resin layer. Carbon black as the colorant was mixed with the plasticizer and dispersed therein, and these were loaded together with the polyvinyl butyral resin (PVB) to an extruder, and kneaded in the extruder to obtain a resin composition for forming a second resin layer. The resin compositions obtained were formed into first and second resin layers each having a thickness shown in Table 1, and these layers were laminated on both surfaces of the reflection layer to produce an interlayer film of a three-layer structure of first resin layer/reflection layer/second resin layer. Thereafter, laminated glass was produced in the same manner as in Example 1.

[Example 16]

Carbon black as the colorant was mixed with the plasticizer according to blending in Table 1 and dispersed therein, and these were loaded together with the polyvinyl butyral resin (PVB) to an extruder, and kneaded in the extruder to obtain a resin composition for forming a first resin layer. The heat shielding material was mixed with the plasticizer and dispersed therein, and these were loaded together with the polyvinyl butyral resin (PVB) to an extruder and kneaded in the extruder to obtain a resin composition for forming a second resin layer. The resin compositions obtained were formed into first and second resin layers each having a thickness shown in Table 1, and these layers were laminated on both surfaces of the reflection layer to produce an interlayer film of a three-layer structure of first resin layer/reflection layer/second resin layer. Thereafter, laminated glass was produced in the same manner as in Example 1.

[Examples 17 to 19]

Operations were carried out in the same manner as Example 2 except that the reflection layer was changed as described in Table 1.

[Comparative Example 1]

Operations were carried out in the same manner as Example 2 except that resin compositions were obtained in the same manner as in Example 2, the resin compositions obtained were formed into first and second resin layers each having a thickness shown in Table 1 and these were directly laminated to produce an interlayer film of a two-layer structure of first resin layer/second resin layer.

[Table 1]

| | | | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|---|---|
| Configuration | Second laminated glass member (car exterior side) | Detail information | Type | | - | CLR | CLR | CLR | CLR | CLR | CLR | CLR | CLR | CLR | CLR |
| | | | Thickness | | mm | 2.5 | 2.5 | 2.5 | 2.5 | 2.5 | 2.5 | 2.5 | 2.5 | 2.5 | 2.5 |
| | | Transmitted light | Transmission L* | | - | 96.2 | 96.2 | 96.2 | 96.2 | 96.2 | 96.2 | 96.2 | 96.2 | 96.2 | 96.2 |
| | | | Transmission a* | | - | -0.6 | -0.6 | -0.6 | -0.6 | -0.6 | -0.6 | -0.6 | -0.6 | -0.6 | -0.6 |
| | | | Transmission b* | | - | 0.2 | 0.2 | 0.2 | 0.2 | 0.2 | 0.2 | 0.2 | 0.2 | 0.2 | 0.2 |
| | Second resin layer | Compositional information | Thermoplastic resin | Type | - | PVB | PVB | PVB | PVB | PVB | PVB | PVB | PVB | PVB | PVB |
| | | | | Number of parts | phr | 100 | 100 | 100 | 100 | 100 | 100 | 100 | 100 | 100 | 100 |
| | | | Plasticizer | Type | - | 3GO | 3GO | 3GO | 3GO | 3GO | 3GO | 3GO | 3GO | 3GO | 3GO |
| | | | | Number of parts | phr | 40 | 40 | 40 | 40 | 40 | 40 | 40 | 40 | 40 | 40 |
| | | | Filler (A) | Type | - | - | - | - | - | Filler 1 | Filler 2 | Filler 3 | Filler 4 | Filler 5 | Filler 1 |
| | | | | Weight concentration | wt% | - | - | - | - | 0.15 | 0.15 | 0.15 | 0.15 | 0.15 | 0.15 |
| | | | Heat shielding particle | Type | - | - | - | - | - | - | - | - | - | - | - |
| | | | | Weight concentration | wt% | - | - | - | - | - | - | - | - | - | - |
| | | | Colorant | Type | - | - | - | - | - | - | - | - | - | - | - |
| | | | | Weight concentration | wt% | - | - | - | - | - | - | - | - | - | - |
| | | | Thickness | | μm | 380 | 760 | 760 | 760 | 760 | 760 | 760 | 760 | 760 | 760 |
| | | Transmitted light | Transmission L* | | - | 95.7 | 95.6 | 95.6 | 95.6 | 89.9 | 91.1 | 92.1 | 77.0 | 76.3 | 89.9 |
| | | | Transmission a* | | - | -1.4 | -1.4 | -1.4 | -1.4 | 2.4 | -7.4 | 0.9 | -0.2 | 0.2 | 2.4 |
| | | | Transmission b* | | - | 0.8 | 0.9 | 0.9 | 0.9 | 4.9 | 10.2 | 5.5 | 3.2 | 6.3 | 4.9 |
| | Second member (second glass member + second resin layer) | Transmitted light | Transmission L* | | - | 97.3 | 97.3 | 97.3 | 97.3 | 92.9 | 94.3 | 94.5 | 79.8 | 79.8 | 92.9 |
| | | | Transmission a* | | - | -1.0 | -1.0 | -1.0 | -1.0 | 2.8 | -7.0 | 1.4 | 0.4 | 0.7 | 2.8 |
| | | | Transmission b* | | - | 0.7 | 0.7 | 0.7 | 0.7 | 4.8 | 10.5 | 5.2 | 3.4 | 6.1 | 4.8 |
| | Reflection layer | Detail information | Type | | - | GM40 | GM40 | GM40 | GL40 | GM40 | GM40 | GM40 | GM40 | GM40 | GL40 |
| | | | Thickness | | μm | 105 | 105 | 105 | 105 | 105 | 105 | 105 | 105 | 105 | 105 |
| | | Reflectance | Average reflectance at 380 to 780 nm | | % | 50.51 | 50.51 | 50.51 | 35.96 | 50.51 | 50.51 | 50.51 | 50.51 | 50.51 | 35.96 |
| | | | Average reflectance at 780 nm to 2500 nm | | % | 16.43 | 16.43 | 16.43 | 13.82 | 16.43 | 16.43 | 16.43 | 16.43 | 16.43 | 13.82 |
| | | | Average reflectance at 380 nm to 2500 nm | | % | 22.84 | 22.84 | 22.84 | 17.97 | 22.84 | 22.84 | 22.84 | 22.84 | 22.84 | 17.97 |
| | First resin layer | Compositional information | Thermoplastic resin | Type | - | PVB | PVB | PVB | PVB | PVB | PVB | PVB | PVB | PVB | PVB |
| | | | | Number of parts | phr | 100 | 100 | 100 | 100 | 100 | 100 | 100 | 100 | 100 | 100 |
| | | | Plasticizer | Type | - | 3GO | 3GO | 3GO | 3GO | 3GO | 3GO | 3GO | 3GO | 3GO | 3GO |
| | | | | Number of parts | phr | 40 | 40 | 40 | 40 | 40 | 40 | 40 | 40 | 40 | 40 |
| | | | Filler (A) | Type | - | - | - | - | - | - | - | - | - | - | - |
| | | | | Weight concentration | wt% | - | - | - | - | - | - | - | - | - | - |
| | | | Heat shielding particle | Type | - | - | - | - | - | - | - | - | - | - | - |
| | | | | Weight concentration | wt% | - | - | - | - | - | - | - | - | - | - |
| | | | Colorant | Type | - | - | CB | CB | CB | CB | CB | CB | CB | CB | CB |
| | | | | Weight concentration | wt% | - | 0.008 | 0.095 | 0.008 | 0.008 | 0.008 | 0.008 | 0.008 | 0.008 | 0.008 |
| | | | Thickness | | μm | 760 | 760 | 760 | 760 | 760 | 760 | 760 | 760 | 760 | 760 |
| | | Transmitted light | Transmission L* | | - | 95.6 | 50.3 | 13.8 | 50.3 | 50.3 | 50.3 | 50.3 | 50.3 | 50.3 | 50.3 |
| | | | Transmission a* | | - | -1.4 | -6.3 | -2.7 | -6.3 | -6.3 | -6.3 | -6.3 | -6.3 | -6.3 | -6.3 |
| | | | Transmission b* | | - | 0.9 | 1.5 | 4.9 | 1.5 | 1.5 | 1.5 | 1.5 | 1.5 | 1.5 | 1.5 |
| | First laminated glass member (car interior side) | Compositional information | Type | | - | CLR | CLR | CLR | CLR | CLR | CLR | CLR | CLR | CLR | CLR |
| | | | Thickness | | mm | 2.5 | 2.5 | 2.5 | 2.5 | 2.5 | 2.5 | 2.5 | 2.5 | 2.5 | 2.5 |
| | | Transmitted light | Transmission L* | | - | 96.2 | 96.2 | 96.2 | 96.2 | 96.2 | 96.2 | 96.2 | 96.2 | 96.2 | 96.2 |
| | | | Transmission a* | | - | -0.6 | -0.6 | -0.6 | -0.6 | -0.6 | -0.6 | -0.6 | -0.6 | -0.6 | -0.6 |
| | | | Transmission b* | | - | 0.2 | 0.2 | 0.2 | 0.2 | 0.2 | 0.2 | 0.2 | 0.2 | 0.2 | 0.2 |
| | First member (first glass member + first resin layer) | Transmitted light | Transmission L* | | - | 97.3 | 52.2 | 14.8 | 52.2 | 52.2 | 52.2 | 52.2 | 52.2 | 52.2 | 52.2 |
| | | | Transmission a* | | - | -1.0 | -6.0 | -2.3 | -6.0 | -6.0 | -6.0 | -6.0 | -6.0 | -6.0 | -6.0 |
| | | | Transmission b* | | - | 0.7 | 1.3 | 4.9 | 1.3 | 1.3 | 1.3 | 1.3 | 1.3 | 1.3 | 1.3 |
| | Optical properties | | ΔL*(G) | | | 0.0 | 0.0 | 0.0 | 0.0 | 0.0 | 0.0 | 0.0 | 0.0 | 0.0 | 0.0 |
| | | | ⊿E*ab(G) | | | 0.0 | 0.0 | 0.0 | 0.0 | 0.0 | 0.0 | 0.0 | 0.0 | 0.0 | 0.0 |
| | | | ΔL*(S) | | | 0.1 | 45.3 | 81.8 | 45.3 | 39.6 | 40.9 | 41.8 | 26.7 | 26.0 | 39.6 |
| | | | ⊿E*ab(S) | | - | 0.1 | 45.6 | 81.9 | 45.6 | 40.7 | 41.8 | 42.6 | 27.4 | 27.2 | 40.7 |
| | | | ΔE＊ab(M) | | | 0.0 | 45.4 | 82.7 | 45.4 | 41.8 | 43.1 | 43.2 | 28.5 | 28.9 | 41.8 |
| Evaluation | Reflected light | From car exterior side | Reflection L* | | - | 72.3 | 71.2 | 70.2 | 60.5 | 72.0 | 72.2 | 71.8 | 72.8 | 73.4 | 63.0 |
| | | | Reflection a* | | - | -7.9 | -7.2 | -7.2 | -6.1 | -9.0 | -4.9 | -7.8 | -7.3 | -5.8 | -7.2 |
| | | | Reflection b* | | - | 7.8 | 9.0 | 7.9 | 7.4 | 6.2 | 4.8 | 6.2 | 6.7 | 5.8 | 3.3 |
| | | From car interior side | Reflection L* | | - | 72.1 | 30.1 | 25.7 | 28.8 | 29.9 | 30.2 | 30.2 | 30.4 | 30.5 | 28.9 |
| | | | Reflection a* | | - | -8.0 | -2.4 | 0.1 | -1.7 | -2.6 | -2.2 | -2.6 | -2.7 | -2.5 | -1.9 |
| | | | Reflection b* | | - | 8.2 | 0.6 | -1.1 | 0.2 | 0.4 | 0.3 | 0.5 | 0.6 | 0.5 | -0.1 |
| | | Color difference | ⊿E*ab(Rg) [⊿E*ab(R)] | | - | 0.5 | 42.2 | 45.9 | 32.8 | 43.0 | 42.3 | 42.3 | 43.0 | 43.4 | 34.6 |
| | | From car exterior side | Tts | | - | 54.9 | 32.7 | 23.0 | 37.2 | 31.5 | 31.7 | 32.0 | 29.3 | 29.1 | 35.1 |
| Rating | Aesthetic Quality | | | | - | 3 | 1 | 1 | 1 | 2 | 2 | 2 | 2 | 2 | 2 |

[Table 2]

| | | | | | Example 11 | Example 12 | Example 13 | Example 14 | Example 15 | Example 16 | Example 17 | Example 18 | Example 19 | Comp. Ex. 1 |
|---|---|---|---|---|---|---|---|---|---|---|---|---|---|---|
| Configuration | Second laminated glass member (car exterior side) | Detail information | Type | - | CLR | CLR | CLR | CLR | CLR | CLR | CLR | CLR | CLR | CLR |
| | | | Thickness | mm | 2.5 | 2.5 | 2.5 | 2.5 | 2.5 | 2.5 | 2.5 | 2.5 | 2.5 | 2.5 |
| | | Transmitted light | Transmission L* | - | 96.2 | 96.2 | 96.2 | 96.2 | 96.2 | 96.2 | 96.2 | 96.2 | 96.2 | 96.2 |
| | | | Transmission a* | - | -0.6 | -0.6 | -0.6 | -0.6 | -0.6 | -0.6 | -0.6 | -0.6 | -0.6 | -0.6 |
| | | | Transmission b* | - | 0.2 | 0.2 | 0.2 | 0.2 | 0.2 | 0.2 | 0.2 | 0.2 | 0.2 | 0.2 |
| | Second resin layer | Compositional information | Thermoplastic resin Type | - | PVB | PVB | PVB | PVB | PVB | PVB | PVB | PVB | PVB | PVB |
| | | | Number of parts | phr | 100 | 100 | 100 | 100 | 100 | 100 | 100 | 100 | 100 | 100 |
| | | | Plasticizer Type | - | 3GO | 3GO | 3GO | 3GO | 3GO | 3GO | 3GO | 3GO | 3GO | 3GO |
| | | | Number of parts | phr | 40 | 40 | 40 | 40 | 40 | 40 | 40 | 40 | 40 | 40 |
| | | | Filler (A) Type | - | - | Filler 1 | - | Filler 1 | - | - | - | - | - | - |
| | | | Weight concentration | wt% | - | 0.15 | - | 0.15 | - | - | - | - | - | - |
| | | | Heat shielding particle Type | - | - | - | - | - | - | ITO | | | | - |
| | | | Weight concentration | wt% | - | - | - | - | - | 0.15 | | | | - |
| | | | Colorant Type | - | - | - | - | - | GRN | - | - | - | - | - |
| | | | Weight concentration | wt% | - | - | - | - | 0.0025 | - | - | - | - | - |
| | | | Thickness | µm | 760 | 760 | 760 | 760 | 760 | 760 | 760 | 760 | 760 | 760 |
| | | Transmitted light | Transmission L* | - | 95.6 | 89.9 | 95.6 | 89.9 | 93.1 | 95.0 | 95.6 | 95.6 | 95.6 | 95.6 |
| | | | Transmission a* | - | -1.4 | 2.4 | -1.4 | 2.4 | -5.0 | -2.0 | -1.4 | -1.4 | -1.4 | -1.4 |
| | | | Transmission b* | - | 0.9 | 4.9 | 0.9 | 4.9 | -2.6 | 1.5 | 0.9 | 0.9 | 0.9 | 0.9 |
| | Second member (second glass member + second resin layer) | Transmitted light | Transmission L* | - | 97.3 | 92.9 | 97.3 | 92.9 | 94.7 | 95.3 | 97.3 | 97.3 | 97.3 | 97.3 |
| | | | Transmission a* | - | -1.0 | 2.8 | -1.0 | 2.8 | -4.6 | -1.7 | -1.0 | -1.0 | -1.0 | -1.0 |
| | | | Transmission b* | - | 0.7 | 4.8 | 0.7 | 4.8 | -2.9 | 1.3 | 0.7 | 0.7 | 0.7 | 0.7 |
| | Reflection layer | Detail information | Type | - | GM40 | GM40 | GM40 | GM40 | GM40 | GM40 | Film 1 | Film 2 | Film 3 | - |
| | | | Thickness | µm | 105 | 105 | 105 | 105 | 105 | 105 | 105 | 105 | 105 | - |
| | | Reflectance | Average reflectance at 380 to 780 nm | % | 50.51 | 50.51 | 50.51 | 50.51 | 50.51 | 50.51 | 44.13 | 33.30 | 57.42 | - |
| | | | Average reflectance at 780 nm to 2500 nm | % | 16.43 | 16.43 | 16.43 | 16.43 | 16.43 | 16.43 | 15.41 | 13.84 | 18.54 | - |
| | | | Average reflectance at 380 to 2500 nm | % | 22.84 | 22.84 | 22.84 | 22.84 | 22.84 | 22.84 | 20.49 | 17.41 | 25.65 | - |
| | First resin layer | Compositional information | Thermoplastic resin Type | - | PVB | PVB | PVB | PVB | PVB | PVB | PVB | PVB | PVB | PVB |
| | | | Number of parts | phr | 100 | 100 | 100 | 100 | 100 | 100 | 100 | 100 | 100 | 100 |
| | | | Plasticizer Type | | 3GO | 3GO | 3GO | 3GO | 3GO | 3GO | 3GO | 3GO | 3GO | 3GO |
| | | | Number of parts | phr | 40 | 40 | 40 | 40 | 40 | 40 | 40 | 40 | 40 | 40 |
| | | | Filler (A) Type | - | - | - | - | - | - | - | - | - | - | - |
| | | | Weight concentration | wt% | - | - | - | - | - | - | - | - | - | - |
| | | | Heat shielding particle Type | - | - | - | - | - | - | - | - | - | - | - |
| | | | Weight concentration | wt% | - | - | - | - | - | - | - | - | - | - |
| | | | Colorant Type | - | - | - | CB | CB | CB | CB | CB | CB | CB | CB |
| | | | Weight concentration | wt% | - | - | 0.008 | 0.008 | 0.008 | 0.008 | 0.008 | 0.008 | 0.008 | 0.008 |
| | | | Thickness | µm | 760 | 760 | 760 | 760 | 760 | 760 | 760 | 760 | 760 | 760 |
| | | Transmitted light | Transmission L* | - | 95.6 | 95.6 | 50.3 | 50.3 | 50.3 | 50.3 | 50.3 | 50.3 | 50.3 | 50.3 |
| | | | Transmission a* | - | -1.4 | -1.4 | -6.3 | -6.3 | -6.3 | -6.3 | -6.3 | -6.3 | -6.3 | -6.3 |
| | | | Transmission b* | - | 0.9 | 0.9 | 1.5 | 1.5 | 1.5 | 1.5 | 1.5 | 1.5 | 1.5 | 1.5 |
| | First laminated glass member (car interior side) | Compositional information | Type | - | Gray | Gray | Gray | Gray | CLR | CLR | CLR | CLR | CLR | CLR |
| | | | Thickness | mm | 1.8 | 1.8 | 1.8 | 1.8 | 2.5 | 2.5 | 2.5 | 2.5 | 2.5 | 2.5 |
| | | Transmitted light | Transmission L* | - | 69.0 | 69.0 | 69.0 | 69.0 | 96.2 | 96.2 | 96.2 | 96.2 | 96.2 | 96.2 |
| | | | Transmission a* | - | -1.3 | -1.3 | -1.3 | -1.3 | -0.6 | -0.6 | -0.6 | -0.6 | -0.6 | -0.6 |
| | | | Transmission b* | - | 2.0 | 2.0 | 2.0 | 2.0 | 0.2 | 0.2 | 0.2 | 0.2 | 0.2 | 0.2 |
| | First member (first glass member + first resin layer) | Transmitted light | Transmission L* | - | 66.3 | 66.3 | 48.7 | 48.7 | 52.2 | 52.2 | 52.2 | 52.2 | 52.2 | 52.2 |
| | | | Transmission a* | - | -1.5 | -1.5 | -7.4 | -7.4 | -6.0 | -6.0 | -6.0 | -6.0 | -6.0 | -6.0 |
| | | | Transmission b* | | 2.3 | 2.3 | 3.6 | 3.6 | 1.3 | 1.3 | 1.3 | 1.3 | 1.3 | 1.3 |
| | Optical properties | | $\Delta L^*(G)$ | | 27.2 | 27.2 | 27.2 | 27.2 | 0.0 | 0.0 | 0.0 | 0.0 | 0.0 | 0.0 |
| | | | $\Delta E^*ab(G)$ | | 27.3 | 27.3 | 27.3 | 27.3 | 0.0 | 0.0 | 0.0 | 0.0 | 0.0 | 0.0 |
| | | | $\Delta L^*(S)$ | | 0.0 | -5.7 | 45.3 | 39.6 | 42.8 | 44.8 | 45.3 | 45.3 | 45.3 | 45.3 |
| | | | $\Delta E^*ab(S)$ | - | 0.0 | 7.9 | 45.6 | 40.7 | 43.0 | 45.0 | 45.6 | 45.6 | 45.6 | 45.6 |
| | | | $\Delta E^*ab(M)$ | | 31.1 | 27.2 | 49.1 | 45.4 | 42.7 | 43.4 | 45.4 | 45.4 | 45.4 | 45.4 |
| Evaluation | Reflected light | From car exterior side | Reflection L* | - | 71.3 | 72.6 | 71.2 | 72.1 | 66.6 | 70.5 | 61.5 | 66.1 | 78.6 | 26.4 |
| | | | Reflection a* | - | -6.7 | -9.3 | -7.4 | -7.7 | -10.3 | -7.9 | -6.8 | -4.2 | -2.6 | -0.4 |
| | | | Reflection b* | - | 9.3 | 6.2 | 8.7 | 6.2 | 5.7 | 9.7 | 9.8 | 6.4 | 2.8 | -1.0 |
| | | From car interior side | Reflection L* | - | 41.1 | 41.8 | 26.2 | 26.3 | 29.9 | 29.9 | 28.3 | 29.3 | 30.5 | 26.3 |
| | | | Reflection a* | - | -3.5 | -4.6 | -0.6 | -0.7 | -2.5 | -2.5 | -1.6 | -1.4 | -2.1 | -0.3 |
| | | | Reflection b* | - | 5.2 | 4.3 | -0.5 | -0.5 | 0.6 | 0.6 | 0.2 | 0.4 | -0.1 | -0.9 |
| | | Color difference | $\Delta E^*ab(Rg)[\Delta E^*ab(R)]$ | - | 30.6 | 31.2 | 46.4 | 46.9 | 37.8 | 41.9 | 34.9 | 37.3 | 48.1 | 0.2 |
| | | From car exterior side | Tts | - | 35.1 | 33.5 | 25.5 | 24.7 | 33.1 | 30.1 | 40.5 | 39.2 | 36.6 | 45.4 |
| Rating | Aesthetic Quality | | | - | 1 | 2 | 1 | 2 | 2 | 1 | 1 | 1 | 1 | 4 |

* phr means parts by mass based on 100 parts by mass of PVB.

* wt% is the content (% by mass) in the first resin layer or the second resin layer.

As shown in Table 1, in each of Examples, the color difference ΔE*ab (R) of reflected light of the interlayer film or the color difference ΔE*ab (Rg) of reflected light of the laminated glass was 0.5 or more. Therefore, the design in the case of the laminated glass viewed from the first laminated glass member side (namely, one surface side) thereof was different from the design in the case of the laminated glass viewed from the second laminated glass member side (namely, the other surface side) thereof. In each of Examples, a metallic feeling could be exhibited in view from the second laminated glass member side (car exterior side), and high aesthetic quality was achieved.

In Examples 2 to 19, the colorant was contained in the first resin layer or the first laminated glass member was colored glass, and therefore the design in view from the first laminated glass member side was muted-inspired one. In Examples 5 to 10, 12, and 14 in which the filler (A) was contained in the second resin layer, an impactful appearance could be achieved in view from the second laminated glass member side.

In Example 16 in which the heat shielding material was used, the Tts was lowered and heat shielding performance was enhanced.

On the contrary, in Comparative Example 1, the color difference $\Delta E^*ab$ (R) of reflected light of the interlayer film and the color difference $\Delta E^*ab$ (Rg) of reflected light of the laminated glass were each less than 0.5. Therefore, the design in the case of the laminated glass viewed from the first laminated glass member side (namely, one surface side) thereof was not sufficiently different from the design in the case of the laminated glass viewed from the second laminated glass member side (namely, the other surface side) thereof, and high aesthetic quality could not be imparted.

Reference Signs List

10 interlayer film for laminated glass
10A one surface
10B other surface
11 first resin layer
12 second resin layer
11A, 12A colored layer
11B, 12B filler-containing layer
11C, 12C heat shielding layer
11D, 12D clear layer
11T core layer
11S skin layer
20 laminated glass
21 first laminated glass member
22 second laminated glass member
31 first member
32 second member
100 medium layer
111, 112 coating layer

## Claims

1. An interlayer film for laminated glass having a color difference $\Delta E^*ab$ (R) between an L\*a\*b\* color space of reflected light of light incident from one direction and an L\*a\*b\* color space of reflected light of light incident from an opposite direction of 0.5 or more.

2. The interlayer film for laminated glass according to claim 1, comprising a reflection layer.

3. The interlayer film for laminated glass according to claim 2, wherein the reflection layer is a nano-multilayer film.

4. The interlayer film for laminated glass according to claim 3, wherein the reflection layer comprises two kinds of resin layers A and B different in refractive index, and 30 or more of these layers are laminated.

5. The interlayer film for laminated glass according to claim 4, wherein a thickness of the resin layer A is 30 nm or more and 500 nm or less, and a thickness of the resin layer B is 30 nm or more and 500 nm or less.

6. The interlayer film for laminated glass according to claim 4, wherein a difference in refractive index between the resin layer A and the resin layer B is 0.01 or more and 0.15 or less.

7. The interlayer film for laminated glass according to claim 2, wherein an average reflectance in a wavelength range of 380 to 780 nm of the reflection layer is 25.0% or more.

8. The interlayer film for laminated glass according to claim 2, wherein the reflection layer has an in-plane non-uniform hue.

9. The interlayer film for laminated glass according to claim 2, comprising one or two or more first resin layer(s) disposed on the one surface side of the interlayer film, relative to the reflection layer.

10. The interlayer film for laminated glass according to claim 9, wherein the one or two or more first resin layer(s) comprise at least a colored layer comprising a colorant.

11. The interlayer film for laminated glass according to claim 10, wherein

    the colorant comprises a pigment, and
    the pigment comprises at least one or more selected from the group consisting of carbon black, a quinacridone-based pigment, a copper phthalocyanine-based pigment, a nickel complex azo-based pigment, an isoindolinone pigment, and a perylene-based pigment.

12. The interlayer film for laminated glass according to claim 2, comprising one or two or more second resin layer(s) disposed on the other surface side of the reflection layer, relative to the reflection layer.

13. The interlayer film for laminated glass according to claim 12, wherein the second resin layer comprises a filler (A) comprising at least any of a non-metal material or a metal oxide.

14. The interlayer film for laminated glass according to claim 13, wherein the filler (A) comprises two or more metal oxides.

15. The interlayer film for laminated glass according to claim 14, wherein the two or more metal oxides have refractive indexes different from each other.

16. The interlayer film for laminated glass according to claim 13, wherein the filler (A) has a flat plate shape.

17. The interlayer film for laminated glass according to claim 13, wherein the filler (A) has a multilayer structure.

18. The interlayer film for laminated glass according to any one of claims 13 to 17, wherein an aspect ratio of the filler (A) is 1 or more and 50 or less.

19. The interlayer film for laminated glass according to claim 2, comprising

    one or two or more first resin layer(s) disposed on the one surface side of the interlayer film, relative to the reflection layer, and
    one or two or more second resin layer(s) disposed on the other surface side of the interlayer film, relative to the reflection layer, wherein
    a color difference ΔE*ab (S) in an L*a*b* color system between visible transmitted light of the first resin layer(s) and visible transmitted light of the second resin layer(s) is more than 0 and less than 100.

20. The interlayer film for laminated glass according to claim 1 or 2, wherein the color difference E*ab (R) is 2.0 or more.

21. The interlayer film for laminated glass according to claim 1 or 2, wherein the color difference E*ab (R) is 15 or more.

22. The interlayer film for laminated glass according to claim 1 or 2, wherein the color difference E*ab (R) is 30 or more.

23. Laminated glass comprising

    a first laminated glass member,
    a second laminated glass member, and
    the interlayer film for laminated glass according to claim 1, wherein
    the interlayer film for laminated glass is disposed between the first laminated glass member and the second laminated glass member.

24. Laminated glass having a color difference ΔE*ab (Rg) between an L*a*b* color space of reflected light of light incident from one direction and an L*a*b* color space of reflected light of light incident from an opposite direction of 0.5 or more.

25. The laminated glass according to claim 24, comprising a first laminated glass member, a second laminated glass member, and an interlayer film for laminated glass, wherein

the interlayer film for laminated glass is disposed between the first laminated glass member and the second laminated glass member, and
the interlayer film for laminated glass comprises the reflection layer, and an average reflectance in a wavelength range of 380 to 780 nm of the reflection layer is 25.0% or more.

26. The laminated glass according to any one of claims 23 to 25, comprising a first member, a reflection layer, and a second member, wherein

the first member has a first laminated glass member and one or two or more first resin layer(s),
the second member has a second laminated glass member and one or two or more second resin layer(s),
the first laminated glass member, the first resin layer, the reflection layer, the second resin layer, and the second laminated glass member are disposed in the listed order, and
a color of the first member and a color of the second member are different.

# Fig. 1

(A)

111
100
112

# Fig. 2

20

10A

10 →

21
11(11A)  } 31
15
12(12B)  } 32
22

10B

# Fig. 3

20

10A

10 →

21
11(11A)  } 31
15
12(12C)  } 32
22

10B

# Fig. 4

20

10A

10 →

21
11(11A)  } 31
15
12(12D)  } 32
22

10B

Fig. 5

Fig. 6

Fig. 7

Fig. 8

Fig. 9

Fig. 10

Fig. 11

Fig. 12

Fig. 13

Fig. 14

Fig. 15

Fig. 16

# Fig. 17

# Fig. 18

# Fig. 19

## INTERNATIONAL SEARCH REPORT

| International application No. |
| --- |
| **PCT/JP2024/012513** |

### A. CLASSIFICATION OF SUBJECT MATTER

*C03C 27/12*(2006.01)i; *B32B 7/023*(2019.01)i; *B32B 17/10*(2006.01)i; *B32B 27/08*(2006.01)i; *G02B 5/22*(2006.01)i; *G02B 5/28*(2006.01)i

FI: C03C27/12 N; B32B7/023; B32B17/10; B32B27/08; C03C27/12 K; G02B5/22; G02B5/28

According to International Patent Classification (IPC) or to both national classification and IPC

### B. FIELDS SEARCHED

Minimum documentation searched (classification system followed by classification symbols)

C03C27/12; B32B17/06-B32B17/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2014/021406 A1 (SEKISUI CHEMICAL CO., LTD.) 06 February 2014 (2014-02-06) paragraphs [0160]-[0198], fig. 1, 2 | 1-12, 19-26 |
| X | WO 2019/189741 A1 (SEKISUI CHEMICAL CO., LTD.) 03 October 2019 (2019-10-03) paragraphs [0203]-[0232], fig. 1, 2 | 1-12, 19-26 |
| Y | WO 2014/200108 A1 (SEKISUI CHEMICAL CO., LTD.) 18 December 2014 (2014-12-18) paragraphs [0168]-[0218], fig. 1-4 | 1-26 |
| Y | JP 2011-73943 A (DAI NIPPON PRINTING CO., LTD.) 14 April 2011 (2011-04-14) paragraphs [0026], [0027] | 1-26 |
| Y | WO 2016/028963 A1 (SOLUTIA INC.) 25 February 2016 (2016-02-25) in particular, paragraphs [0041]-[0043] | 1-26 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/012513**

| Patent document cited in search report | | | Publication date (day/month/year) | Patent family member(s) | | | Publication date (day/month/year) |
|---|---|---|---|---|---|---|---|
| WO | 2014/021406 | A1 | 06 February 2014 | US | 2015/0168619 | A1 | |
| | | | | paragraphs [0161]-[0222], fig. 1, 2 | | | |
| | | | | EP | 2883847 | A1 | |
| | | | | CN | 104428267 | A | |
| WO | 2019/189741 | A1 | 03 October 2019 | US | 2021/0078303 | A1 | |
| | | | | paragraphs [0212]-[0255], fig. 1, 2 | | | |
| | | | | EP | 3778517 | A1 | |
| | | | | CN | 111918850 | A | |
| | | | | KR | 10-2020-0138191 | A | |
| WO | 2014/200108 | A1 | 18 December 2014 | US | 2016/0154153 | A1 | |
| | | | | paragraphs [0181]-[0250], fig. 1-4 | | | |
| | | | | EP | 3009412 | A1 | |
| | | | | CN | 104837786 | A | |
| | | | | KR | 10-2016-0020399 | A | |
| JP | 2011-73943 | A | 14 April 2011 | (Family: none) | | | |
| WO | 2016/028963 | A1 | 25 February 2016 | US | 2016/0053084 | A1 | |
| | | | | EP | 3183114 | A1 | |
| | | | | CN | 106573447 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022075184 A
- WO 2016028963 A
- JP 2004249587 A
- JP 2005059332 A
- JP 2007301982 A
- JP 2009078421 A
- JP 2010184493 A
- JP 2015110276 A

**Non-patent literature cited in the description**

- *CHEMICAL ABSTRACTS*, 1333-86-4
- *CHEMICAL ABSTRACTS*, 147-14-8